# EUROPEAN PATENT SPECIFICATION

(11) **EP 4 597 344 B1**
(45) Date of publication and mention of the grant of the patent: **04.11.2026**
(21) Application number: 23872272.2
(22) Date of filing: 25.09.2023
(51) Int. Cl.: G06F 21/55, B60R 16/023, H04L 9/40, H04L 67/12, G06F 21/56

(54) **ATTACK ANALYSIS DEVICE, ATTACK ANALYSIS METHOD, AND ATTACK ANALYSIS PROGRAM**
ANGRIFFSANALYSEVORRICHTUNG, ANGRIFFSANALYSEVERFAHREN UND ANGRIFFSANALYSEPROGRAMM
DISPOSITIF, PROCÉDÉ ET PROGRAMME D'ANALYSE D'ATTAQUE

(30) Priority: 30.09.2022 JP 2022157958; 31.07.2023 JP 2023124717
(43) Date of publication of application: 06.08.2025
(73) Proprietor: DENSO CORPORATION, Kariya-city, Aichi-pref., 448-8661 (JP)
(72) Inventor: IKUSE, Tomonori, Kariya-city, Aichi-pref., 448-8661 (JP); EGAWA, Masumi, Kariya-city, Aichi-pref., 448-8661 (JP); ABE, Taiji, Kariya-city, Aichi-pref., 448-8661 (JP); UTSUNOMIYA, Hiroyuki, Kariya-city, Aichi-pref., 448-8661 (JP); NAGARA, Keigo, Kariya-city, Aichi-pref., 448-8661 (JP)
(74) Representative: Winter, Brandl - Partnerschaft mbB
(86) International application number: PCT/JP2023/034764
(87) International publication number: WO 2024/071049

(56) References cited:
- WO-A1-2021/131193
- WO-A1-2021/145144
- JP-A- 2014 113 901
- JP-A- 2021 076 949
- US-A1- 2019 349 394
- US-A1- 2022 309 153

## Description

### TECHNICAL FIELD

The present disclosure relates to an attack analysis device, an attack analysis method, and an attack analysis program.

### BACKGROUND ART

In recent years, techniques for performing driving assistance and automated driving control including V2X such as vehicle-to-vehicle communication and road-to-vehicle communication have attracted attention. Accordingly, a vehicle has a communication function, and so-called connected vehicles are in progress. As a result, a possibility that a vehicle is subjected to a cyberattack such as unauthorized access increases. Therefore, it is necessary to analyze a cyberattack against a vehicle and construct a countermeasure against the cyberattack.

Document JP 2020-123307A discloses a security device that collects detected abnormality data and collates a combination of items in which an abnormality is detected with an abnormality detection pattern set in advance for each attack, to specify a type of attack corresponding to the abnormality.

Document US 2022/309153 A1 describes an attack analyzer including: a common log acquisition unit acquiring a common security log including abnormality information indicating abnormality detected by an electronic control system, and a common abnormality position indicating an abnormality position of the abnormality converted to be common among the electronic control system and other electronic control systems; an attack/abnormality relationship table storage unit storing an attack/abnormality relationship table; an estimation unit; and an output unit outputting attack information including the attack type.

### SUMMARY OF INVENTION

The inventors of the present application have intensively studied a technology for analyzing a cyberattack against a vehicle on the basis of: measured abnormality information indicating an abnormality detected by an electronic control system constructed in the vehicle; and predicted abnormality information indicating an abnormality predicted to occur in the electronic control system when the vehicle is attacked. In this type of technology, it is desirable to be able to analyze the cyberattack against the vehicle with high accuracy.

It is an object of the present invention to provide a technology capable of analyzing a cyberattack against a vehicle with high accuracy. The object is solved by the features of the independent claims. The dependent claims are directed to preferred embodiments of the invention.

According to the present invention, the presence or absence of violation is determined on the basis of whether or not correspondence information in which a system log and a communication log are associated with each other matches a type of attack. Therefore, it is possible to analyze an attack via a network against the vehicle with high accuracy.

### BRIEF DESCRIPTION OF DRAWINGS

FIG. 1 is a block diagram illustrating a configuration of an attack analysis system according to a first embodiment.
FIG. 2 is a diagram illustrating an example of arrangement of an electronic control unit in an electronic control system.
FIG. 3 is a table illustrating an example of data stored in a vehicle log DB.
FIG. 4 is a block diagram illustrating a configuration of an inspection section.
FIG. 5A is a table illustrating an example of data of a communication analysis result table stored in a communication detection log DB according to the first embodiment.
FIG. 5B is a table illustrating an example of data of a malware analysis result table stored in the communication detection log DB.
FIG. 6 is a block diagram illustrating a configuration of an analysis section according to the first embodiment.
FIG. 7 is a table illustrating an example of predicted abnormality information.
FIG. 8 is a table illustrating another example of predicted abnormality information.
FIG. 9 is a sequence diagram of attack analysis processing according to the first embodiment.
FIG. 10A is a table illustrating an example of information obtained by a communication data monitoring section.
FIG. 10B is a table illustrating an example of monitoring management information.
FIG. 10C is a table illustrating information to be inspected by the inspection section.
FIG. 11 is a block diagram illustrating a configuration of an attack analysis system according to a second embodiment.
FIG. 12 is a block diagram illustrating a configuration of an analysis section according to the second embodiment.
FIG. 13 is a sequence diagram of attack analysis processing according to the second embodiment.
FIG. 14 is a flowchart illustrating log association processing according to the second embodiment.
FIG. 15A is a first part of a flowchart illustrating mediation communication determination processing in the log association processing according to the second embodiment.
FIG. 15B is a second part of the flowchart illustrating the mediation communication determination processing according to the second embodiment.
FIG. 16 is a table illustrating an example of a communication mediation history according to the second embodiment.
FIG. 17 is a table illustrating an example of function information (for example, a communication-related function) according to the second embodiment.
FIG. 18 is a table illustrating an example of data of a communication analysis result table stored in a communication detection log DB according to the second embodiment.
FIG. 19 is a flowchart illustrating violation determination processing according to the second embodiment.
FIG. 20 is a flowchart illustrating human-made communication determination processing in the violation determination processing according to the second embodiment.
FIG. 21 is a table illustrating an example of data of a communication analysis result table stored in a communication detection log DB according to a third embodiment.
FIG. 22A is a first part of a flowchart illustrating mediation communication determination processing in the log association processing according to a fourth embodiment.
FIG. 22B is a second part of the flowchart illustrating the mediation communication determination processing according to the fourth embodiment.
FIG. 23 is a table illustrating an example of a communication mediation history according to the fourth embodiment.
FIG. 24 is a table illustrating an example of function information (for example, a communication-related function) according to the fourth embodiment.
FIG. 25 is a table illustrating an example of an application log.
FIG. 26 is a flowchart illustrating human-made communication determination processing in the violation determination processing according to the fourth embodiment.
FIG. 27 is a block diagram illustrating a configuration of an analysis section according to a fifth embodiment.
FIG. 28 is a sequence diagram of attack analysis processing according to the fifth embodiment.

### DESCRIPTION OF EMBODIMENTS

Hereinafter, exemplary embodiments of the present disclosure will be described with reference to the drawings.

### (1. First Embodiment)

### (1-1. Configuration)

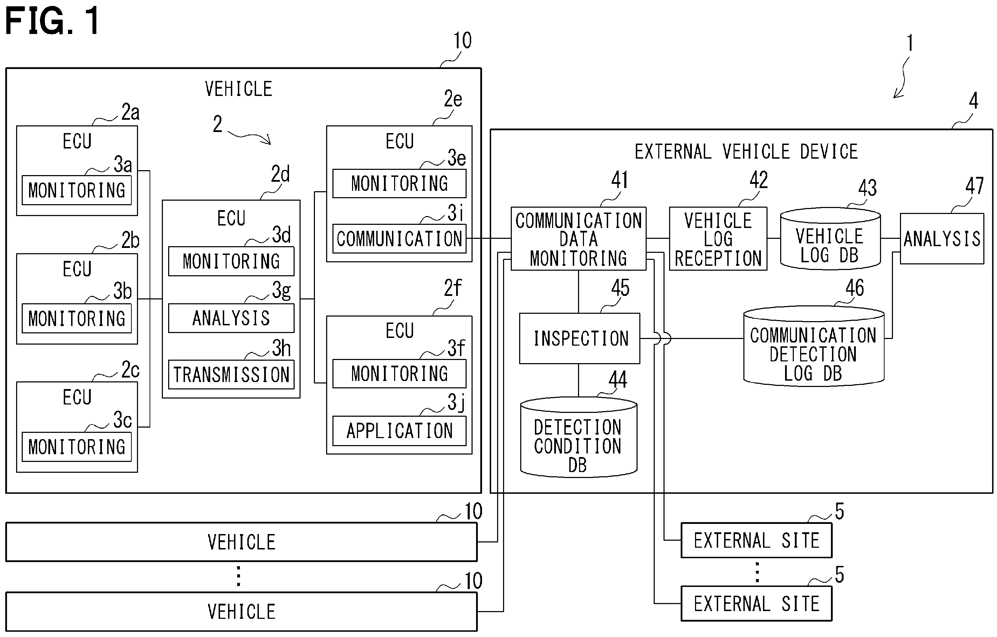

An attack analysis system 1 illustrated in FIG. 1 is a system that analyzes an attack via a network against an electronic control system 2 constructed in a vehicle 10. The attack via a network means a so-called cyberattack.

The attack analysis system 1 includes the electronic control system 2 and an external vehicle device 4.

The electronic control system 2 includes a plurality of electronic control units (hereinafter, ECUs). In the example illustrated in FIG. 1, the electronic control system 2 includes ECUs 2a to 2f. The ECUs 2a to 2f are connected via an in-vehicle network using CAN (registered trademark) or Ethernet (registered trademark). CAN is an abbreviation for controller area network.

The ECUs 2a to 2f respectively include monitoring sections 3a to 3f. The monitoring sections 3a to 3f are security sensors that monitor a program executed by a CPU included in the ECU and a network to which the ECU is connected. The ECUs 2a to 2f generate a system log when executing processing based on the program. The system log is a log of the electronic control system 2, more specifically, a log related to the electronic control system 2 and generated by the electronic control system 2. The system log includes a security log, a communication mediation history to be described in detail in a second embodiment and subsequent embodiments, an application log to be described in detail in a fourth embodiment and subsequent embodiments, and the like, but does not include a communication log to be described later. The system log is also referred to as a vehicle log when the system log is used away from the vehicle 10.

The monitoring sections 3a to 3f generate a security log upon detecting an abnormality in the program or the network. Information indicating the abnormality detected by the electronic control system 2 is recorded in the security log. For example, a time at which the abnormality is detected, an abnormal position indicating a position where the abnormality has occurred, identification information of the security sensor that has detected the abnormality, and the like are recorded.

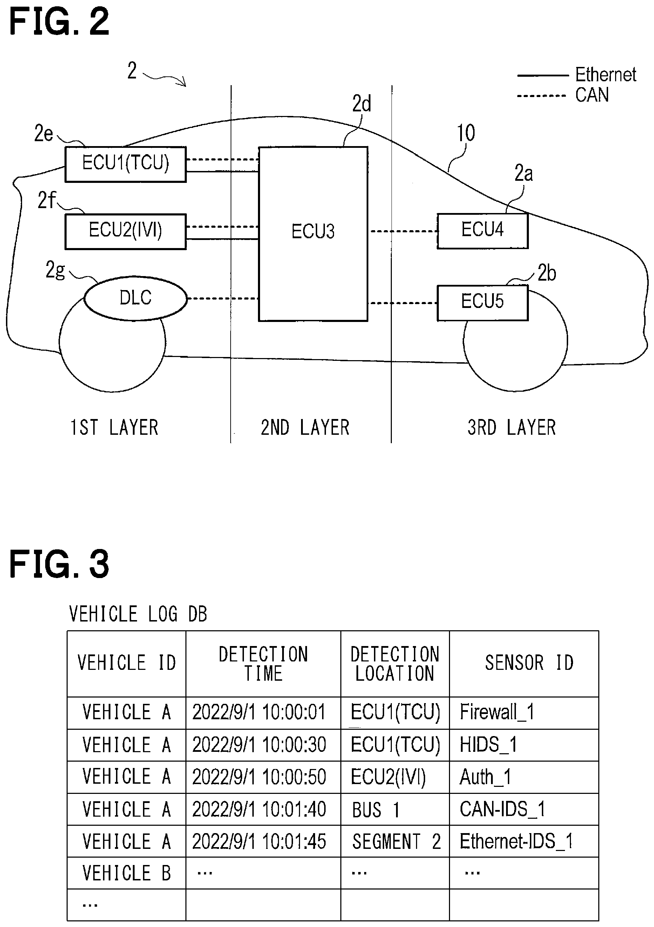

As illustrated in FIG. 2, in the electronic control system 2, a multi-layer defense is adopted to enhance security against an attack. In the multi-layer defense, different security functions are provided in a hierarchical and multi-layer manner. Therefore, for example, even if a first layer is broken through when there is an attack, there is a possibility that a second layer can protect against the attack. With this configuration, defense power of the electronic control system 2 can be enhanced. In the present embodiment, the electronic control system 2 has a defense layer of three layers. In FIG. 2, the electronic control system 2 is mounted with a DLC 2g. DLC is an abbreviation for data link connector. The ECU 2e, the ECU 2f, and the DLC 2g belong to a first layer, the ECU 2d belongs to a second layer, and the ECU 2a and the ECU 2b belong to a third layer. The ECU 2c is not illustrated in FIG. 2. In addition, the defense layer is not limited to three layers, and a defense layer of four or more layers may be provided, for example.

Returning to FIG. 1, the ECU 2d may include a transmission section 3h that transmits data to an analysis section 3g and other ECUs, in addition to the monitoring section 3d. The analysis section 3g may manage the security log in the electronic control system 2 and detect a certain abnormal behavior before outputting the security log from the vehicle 10 to the external vehicle device 4. Further, the ECU 2e includes a communication section 3i, and the communication section 3i transmits the security log of each ECU to a communication data monitoring section 41 to be described later. The ECU 2f includes an application 3j and executes any application function.

The external vehicle device 4 is a computing machinery (that is, a computer) device installed outside the vehicle 10, and mainly includes a known computer having a CPU, a ROM, a RAM, a flash memory, and the like. The CPU executes a program stored in the ROM which is a non-transitory tangible recording medium. By executing the program, a method corresponding to the program is executed. Note that the external vehicle device 4 may include one computer or a plurality of computers.

A method for implementing functions of individual sections included in the external vehicle device 4 is not limited to software, and some or all of the functions may be implemented using one or more pieces of hardware. For example, in a case where the above-described function is implemented by an electronic circuit that is hardware, the electronic circuit may be implemented by a digital circuit, an analog circuit, or a combination thereof.

The external vehicle device 4 includes the communication data monitoring section 41, a vehicle log reception section 42, a vehicle log DB 43, a detection condition DB 44, an inspection section 45, a communication detection log DB 46, and an analysis section 47.

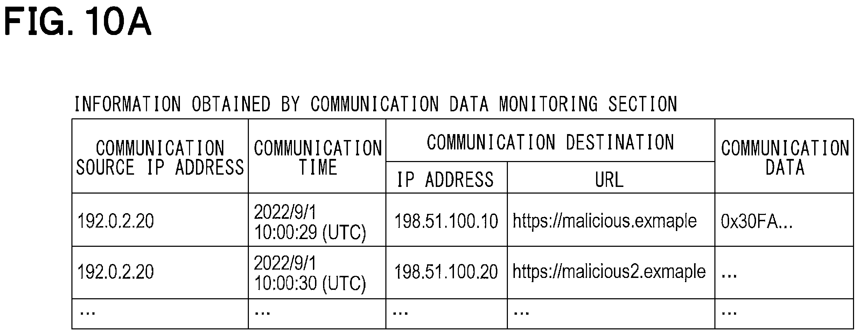

The communication data monitoring section 41 is configured as, for example, a proxy that substitutes for access inside and outside the network or a full packet capture device capable of collecting all packets passing therethrough. The communication data monitoring section 41 generates a communication log of the vehicle 10 by relaying and monitoring communication between each vehicle 10 and an external site 5 outside the vehicle 10. In a case where the communication data monitoring section 41 is the proxy and the vehicle 10 also has a proxy function, for example, communication between the vehicle 10 and the external site 5 can be made pass through the communication data monitoring section 41 by designating the communication data monitoring section 41 as the next destination by the proxy function of the vehicle 10. Furthermore, in a case where the communication data monitoring section 41 is the full packet capture device, for example, communication between the vehicle 10 and the external site 5 can be made pass through the communication data monitoring section 41 by setting a transfer policy of a firewall provided in the vehicle 10. Note that the communication log is a log generated by the external vehicle device 4, and is a log related to communication between the electronic control system 2 and the external site 5 outside the vehicle 10. In the communication log, for example, as illustrated in FIG. 10A, a communication time, a communication source (including an IP address), a communication destination (including an IP address and a URL), a communication content, and the like are recorded.

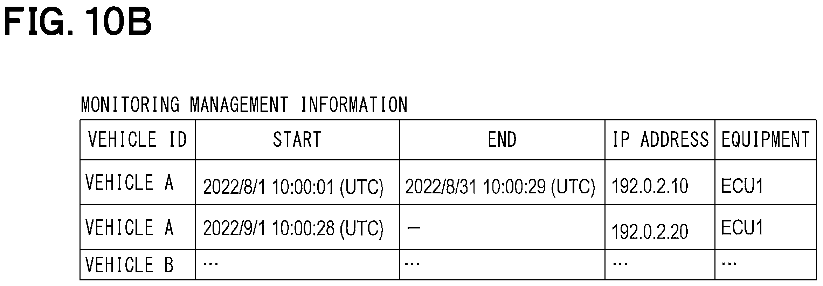

The communication data monitoring section 41 handles monitoring management information as illustrated in FIG. 10B, for example, separately from the communication log. The monitoring management information is stored in, for example, the vehicle log DB 43. The monitoring management information includes, for example, information such as a vehicle ID, a start time and an end time of communication, an IP address of a communication source, and equipment of the communication source.

The monitoring management information is acquired by actively notifying the external vehicle device 4 of information from the vehicle 10, for example, when the ECU 2e is activated or when an IP address used by the communication section 3i is changed. When the communication data monitoring section 41 is the proxy, the monitoring management information can be acquired and generated on the basis of authentication information at a start of communication or vehicle configuration management information.

The vehicle log reception section 42 receives the security log from each vehicle 10, and registers the security log in the vehicle log DB 43.

The vehicle log DB 43 is a database that holds the security log collected from each vehicle 10. As illustrated in FIG. 3, the vehicle log DB 43 stores data associated with a vehicle ID, a detection time, a detection place, and a sensor ID.

The detection condition DB 44 is a database that holds information to be used by a structure analysis section 451 of the inspection section 45. For example, threat information, signatures, behavior patterns, and the like are stored in the detection condition DB 44. The threat information is a known malicious communication destination or a file hash value. The signature is pattern information indicating malicious communication data, file data, and program function. The behavior pattern is information indicating a behavior pattern of a malicious file, such as a malicious behavior trace or malware.

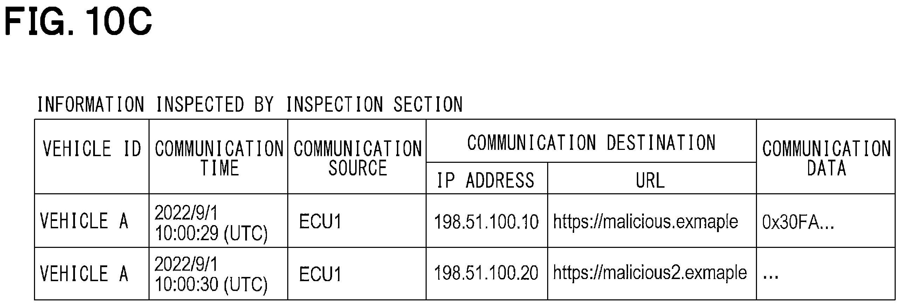

The inspection section 45 analyzes the communication log and specifies a malicious communication destination and a malicious communication content. The communication log to be used for analysis by the inspection section 45 is, for example, as illustrated in FIG. 10C, information obtained by extracting necessary information from the communication log illustrated in FIG. 10A and the monitoring management information illustrated in FIG. 10B. This information may include, for example, a vehicle ID, a communication time, a communication source equipment, a communication destination (including an IP address and a URL), and a content (category) of communication data.

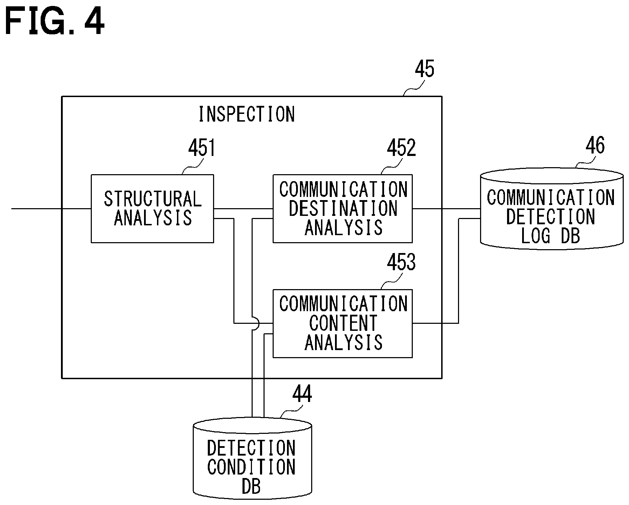

As illustrated in FIG. 4, the inspection section 45 includes the structure analysis section 451, a communication destination analysis section 452, and a communication content analysis section 453.

The structure analysis section 451 extracts information that should be analyzed by the structure analysis section 451 and the communication destination analysis section 452, from the communication log. Specifically, the structure analysis section 451 analyzes a structure of a URL to extract an IP address and a domain name and analyzes a structure of a communication content, to extract data and files that should be analyzed by the communication destination analysis section 452.

The communication destination analysis section 452 specifies a malicious communication destination. Specifically, the communication destination analysis section 452 determines whether or not a communication destination recorded in the communication log or communication destination extracted by the structure analysis section 451 matches a malicious communication destination registered in the detection condition DB 44. For example, an IP address, a domain, a URL, and the like are registered as the malicious communication destinations. It is also determined whether or not the communication destination of the communication log matches a communication destination of a file determined to be malicious by the communication content analysis section 453.

The communication content analysis section 453 specifies a malicious communication content. Specifically, the communication content analysis section 453 performs surface layer analysis, static analysis, and dynamic analysis on data and a file extracted by the structure analysis section 451, and determines whether or not the analysis result matches a content registered in the detection condition DB 44.

In the surface layer analysis, information indicating whether the file itself is malicious or meta information of the file is collected.

In the static analysis, information on functions and characteristic byte sequences included in a program code of malware is collected. Potential functions that do not operate with dynamic analysis are also targets.

In the dynamic analysis, information on what trace remains and what communication occurs when the program code actually operates is collected. The program code is actually operated for the behavior analysis.

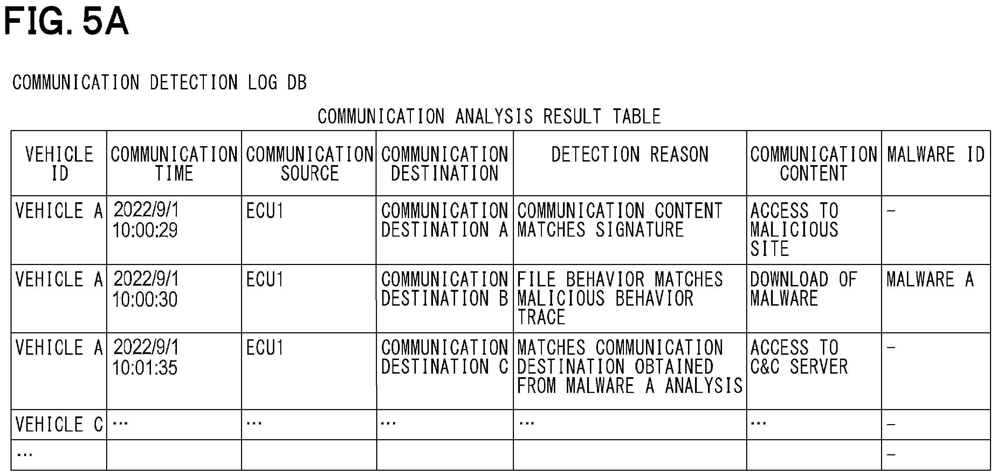

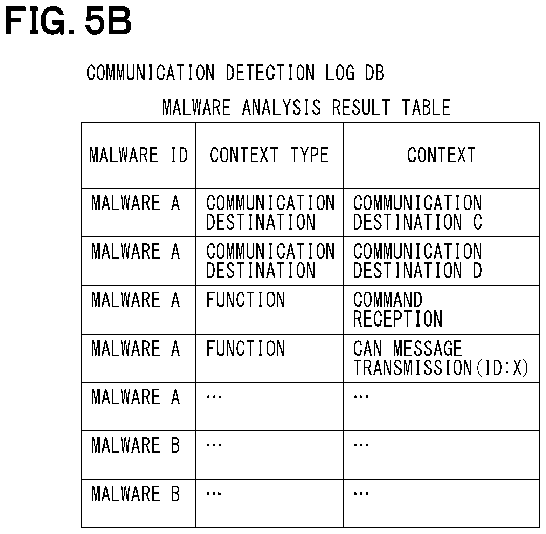

The communication detection log DB 46 is a database that holds the communication log analyzed by the communication destination analysis section 452 or the communication content analysis section 453. Hereinafter, a communication log determined to match a detection condition by the communication destination analysis section 452 or the communication content analysis section 453 is also referred to as a communication detection log. The communication detection log DB 46 stores a communication analysis result table and a malware analysis result table. As illustrated in FIG. 5A, the communication analysis result table stores data associated with a vehicle ID, a communication time, a communication source, a communication destination, a detection reason, a communication content, and a malware ID. As illustrated in FIG. 5B, the malware analysis result table stores data associated with a malware ID, a context type, and a context.

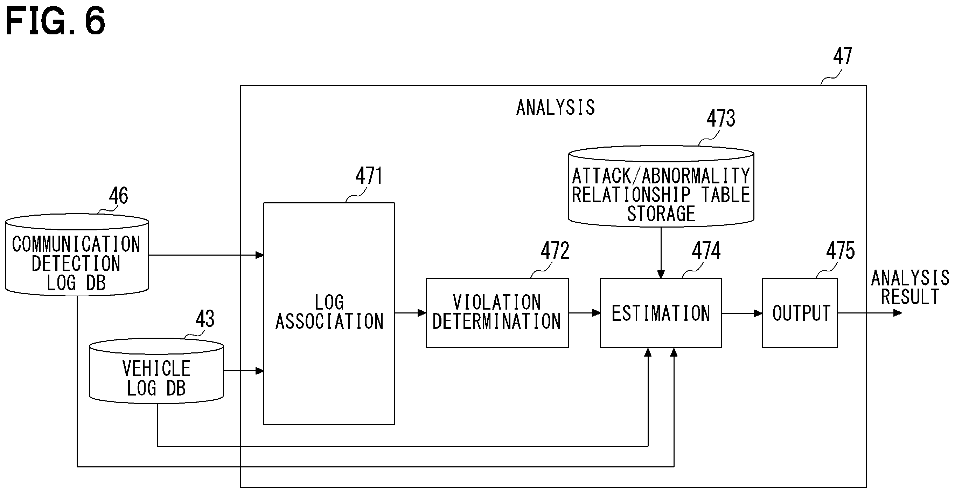

As illustrated in FIG. 6, the analysis section 47 includes a log association section 471, a violation determination section 472, an attack/abnormality relationship table storage section 473, an estimation section 474, and an output section 475.

The log association section 471 associates a log stored in the vehicle log DB 43 with a log stored in the communication detection log DB 46. In the present embodiment, the log association section 471 associates the individual logs by the following processing, and outputs correspondence information which is the associated log, to the violation determination section 472.

First, the log association section 471 extracts a log whose communication time is within a predetermined time frame T1, from the communication detection log DB 46. Further, the log association section 471 extracts a log whose detection time is within the predetermined time frame T1, from the vehicle log DB 43. The time frame T1 is one of a plurality of time ranges divided at predetermined time intervals.

Next, the log association section 471 associates the individual logs from the following viewpoints.

(A1) A vehicle ID in the communication detection log DB 46 matches a vehicle ID in the vehicle log DB 43.

(A2) A communication source or a communication destination in the communication detection log DB 46 matches a detection place in the vehicle log DB 43.

(A3) A communication time in the communication detection log DB 46 and a detection time in the vehicle log DB 43 are within a predetermined time frame T2. Note that the time frame T2 is a time range different from the time frame T1, for example, a time range in units of several seconds, and is a value smaller than the time frame T1.

As described above, the communication detection log and the security log are associated to be synchronized with each other.

The violation determination section 472 determines whether or not the correspondence information matches a preset type of attack. The violation determination section 472 makes the determination for every piece of the correspondence information. Specifically, the violation determination section 472 specifies a position where an abnormality has occurred in the electronic control system 2, on the basis of whether there is a match in any of a plurality of types of attack. Then, it is possible to classify whether the position where the abnormality has occurred is a position violated by an attack or a position highly likely to have been violated by an attack. That is, the violation determination section 472 analyzes the correspondence information, and determines a violation likelihood, which is a likelihood that the ECU of the communication source is violated. The violation likelihood includes two types of likelihood: a case of determining as being highly likely to have been violated and a case of determining as having been violated.

Note that the plurality of types of attack can include at least one of a type of attack related to a communication destination and a type of attack related to a communication content. The type of attack related to a communication destination may include information indicating the communication destination itself such as an IP address, a domain name, and a URL, and information indicating the category of the communication destination such as a C & C server. The type of attack related to a communication content may include information indicating the communication content itself such as transmission data and reception data, and information indicating a category of the communication content such as download of malware, for example, as illustrated in FIG. 5B. Functions of malware other than communication may also be included. The functions of malware other than communication may include, for example, information regarding an operation content of malware harmful to a vehicle, such as disabling a function of a security sensor. Note that the security sensor may include security software.

In the present embodiment, the violation determination section 472 determines that the ECU of the communication source has been violated in the following cases.

(B1) A case where communication for downloading malware has occurred from the ECU that does not perform processing according to user interaction.

(B2) A case where transmission data transmitted by the ECU is determined to be malicious.

(B3) A case where it is confirmed on the basis of the correspondence information that a behavior confirmed at the time of dynamic analysis has occurred in an ECU. For example, this case corresponds to a case where communication after malware infection is recorded, such as performing callback communication to a C & C server, or a case where a CAN message designating a suspicious ID is recorded.

In addition, the violation determination section 472 determines that the ECU of the communication source is highly likely to have been violated in the following cases.

(B4) A case where reception data received by the ECU is determined to be malicious.

(B5) A case where the ECU communicates with a communication destination determined to be malicious.

Note that, in a case where the ECU of the communication source corresponds to both the case of having been violated and the case of being highly likely to have been violated, it is determined that the ECU has been violated. Referring to FIGS. 5A and 5B, for example, there is a record that ECU-1 accesses a malicious site in the first row of the communication analysis result table, and thus ECU-1 corresponds to the case of being highly likely to have been violated. According to the second and third rows of the communication analysis result table, ECU-1 communicates with Communication destination C, which is obtained from an analysis result of Malware A and recorded in the first row of the malware analysis result table. Therefore, ECU-1 also corresponds to the case of having been violated. In this case, the case of having been violated is prioritized, and ECU-1 is determined to have been violated.

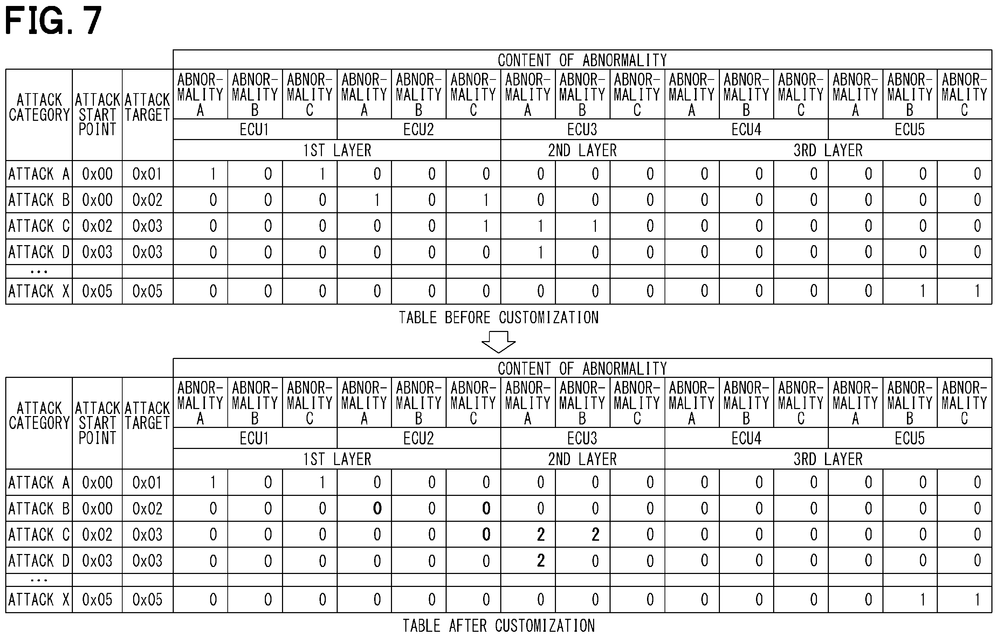

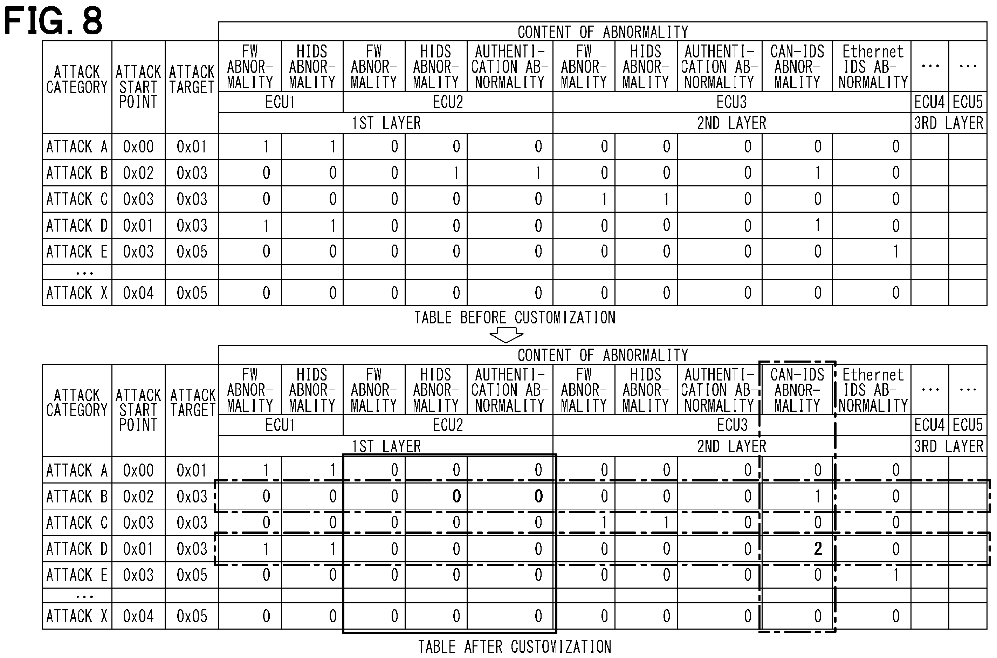

The attack/abnormality relationship table storage section 473 holds predicted abnormality information indicating a combination of abnormalities predicted to occur in the electronic control system 2 in a case where an attack is received, for each category of attack. The predicted abnormality information illustrated in FIGS. 7 and 8 indicates, for each category of attack, an abnormality that occurs and a position where the abnormality occurs when the electronic control system 2 is subjected to a corresponding attack. As illustrated in FIGS. 7 and 8, it is assumed that an abnormality occurs at a plurality of positions when an attack is received. The predicted abnormality information further indicates a correspondence relationship between a category of attack, and an attack start point and an attack target assumed when the attack is received. In FIGS. 7 and 8, the upper table indicates predicted abnormality information held in the attack/abnormality relationship table storage section 473, and the lower table indicates predicted abnormality information after being changed by the estimation section 474.

For example, when an attack whose category of attack is Attack A is received, in the electronic control system 2, Abnormality A and Abnormality C are predicted to occur in ECU-1 located in a first layer. An attack start point of Attack A is a position indicated by 0x00, and an attack target is a position indicated by 0x01. In the attack start point and the attack target, 0x00 indicates an outside of the vehicle, and 0x01 to 0x05 indicate ECU-1 to ECU-5, respectively.

The estimation section 474 estimates a category of attack by determining a similarity between measured abnormality information and the predicted abnormality information. The measured abnormality information is data that is generated on the basis of the security log and indicates a combination of actually detected abnormalities. Specifically, the measured abnormality information is a data string having items similar to contents of abnormalities in the predicted abnormality information in FIGS. 7 and 8, and represented as 1 if there is a security log indicating that an abnormality has been actually detected at the corresponding position, and as 0 if there is no security log. Estimating a category of attack can also be considered as estimating an attack path. This is because it can be considered that "a position of an abnormality predicted to occur in a case of being attacked" indicated in each row of the predicted abnormality information table constitutes the attack path.

Here, the estimation section 474 changes the predicted abnormality information by using the correspondence information before determining the similarity between the measured abnormality information and the predicted abnormality information.

In the present embodiment, the estimation section 474 changes the predicted abnormality information by performing the following processing.

(C1) A coefficient is increased, by a predetermined number, for a table entry corresponding to an ECU that is determined to be highly likely to have been violated. For example, as illustrated in FIG. 7, when it is determined that ECU-3 is highly likely to have been violated, coefficients of Abnormality A and Abnormality B predicted to occur in ECU-3 are changed from 1 to 2 by adding 1.

(C2) A coefficient is increased, by a predetermined number, for a table entry corresponding to an ECU that is determined to have been violated. Alternatively, a coefficient of a table entry corresponding to an ECU located at the same layer as the ECU determined to have been violated is reduced to a predetermined number. For example, as illustrated in FIG. 7, when it is determined that ECU-1 has been violated, coefficients of Abnormality A and Abnormality C predicted to occur in ECU-2 located in the same layer as ECU-1 are set to 0. This means that, in the first layer, not ECU-2 but ECU-1 is specified as an attack entrance.

In addition, for example, using the predicted abnormality information of FIG. 8, when it is determined that ECU-1 has been violated, coefficients of an HIDS abnormality and an authentication abnormality predicted to occur in ECU-2 located in the same layer as ECU-1 are set to 0.

(C3) A coefficient is increased for a table entry of a security sensor in which a security log is recorded among corresponding table entries, in a case where a behavior matching malware that has infected is recorded in the security log, in an ECU determined to have been violated or in a network to which the ECU is in contact. An description will be given to a case where the predicted abnormality information in FIG. 8 is changed, for example, on the basis of the correspondence information including the communication detection logs in FIGS. 5A and 5B. According to the malware analysis result table of FIG. 5B, Malware A has a function of transmitting a CAN message that may be detected by a CAN-IDS. Therefore, in the predicted abnormality information of FIG. 8, among coefficients of a CAN-IDS abnormality of ECU-3 for detecting an abnormality of a CAN bus adjacent to ECU-1 determined to have been violated, in a row in which a coefficient of an abnormality related to ECU-1 is larger than 0, the coefficient of the CAN-IDS abnormality of ECU-3 is changed from 1 to 2 by adding 1.

The estimation section 474 performs the above processing and estimates the category of attack by using the predicted abnormality information with the changed coefficient. In the present embodiment, the measured abnormality information is compared with the predicted abnormality information, and a row of the table having the closest combination is specified. Specifically, an inner product of a data string of the measured abnormality information expressed by a vector and a data string of the predicted abnormality information expressed by a vector is calculated, and a row of the table of the predicted abnormality information is extracted in which a result obtained by dividing the inner product by the number of elements having a value larger than 0 in the vector of the predicted abnormality information has the highest value.

The estimation section 474 may further estimate an attack start point and an attack target in addition to estimating the category of attack. Since the predicted abnormality information stores the category of attack, the attack start point, and the attack target in association with each other, the estimation section 474 can estimate the attack start point and the attack target by using the predicted abnormality information. Here, the ECU determined by the violation determination section 472 to have been violated may be regarded as a damaged position regardless of a result of the estimation section 474. Referring to the example of FIG. 8, for example, in a case where the measured abnormality information has the highest similarity to the row of Attack D, it can be estimated that Attack D has been performed from ECU-1 toward ECU-3. In this way, by estimating the attack start point and the attack target, the path of the attack can also be estimated.

The output section 475 outputs the category of attack estimated by the estimation section 474 to an attack countermeasure device (not illustrated) that takes a countermeasure against the attack.

### (1-2. Processing)

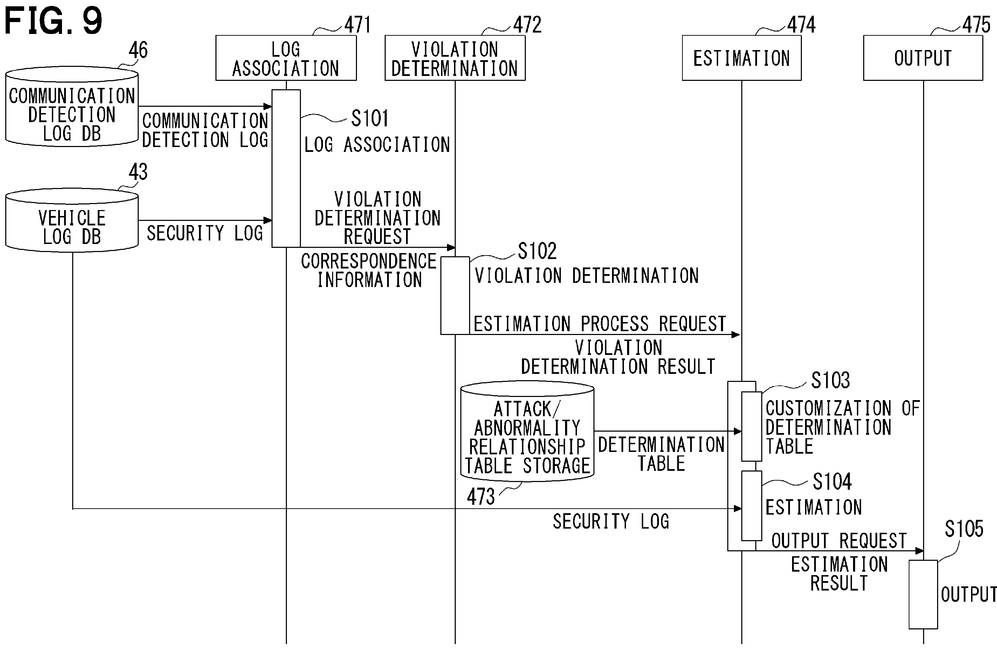

Attack analysis processing performed by the analysis section 47 of the external vehicle device 4 will be described with reference to FIG. 9.

First, in S101, the log association section 471 acquires a security log from the vehicle log DB 43 and a communication detection log from the communication detection log DB 46. Then, the log association section 471 associates the security log with the communication detection log, and outputs correspondence information which is the associated log, to the violation determination section 472.

Subsequently, in S102, the violation determination section 472 analyzes the correspondence information, and determines a violation likelihood of the communication source ECU. The violation determination section 472 outputs a determination result including the violation likelihood to the estimation section 474.

Subsequently, in S103, the estimation section 474 acquires predicted abnormality information held in the attack/abnormality relationship table storage section 473, and updates the predicted abnormality information by using the determination result regarding the correspondence information.

Subsequently, in S104, the estimation section 474 estimates a category of attack by determining a similarity between measured abnormality information indicating a combination of abnormalities actually detected on the basis of the security log and the predicted abnormality information updated in S103. The estimation section 474 outputs the estimated category of attack to the output section 475.

Subsequently, in S105, the output section 475 outputs the category of attack to the attack countermeasure device.

### (1-3. Effects)

According to the first embodiment described in detail above, the following effects can be exhibited.

(1a) The external vehicle device 4 is configured to analyze an attack via a network against the electronic control system 2 constructed in the vehicle 10. The external vehicle device 4 includes the analysis section 47. The analysis section 47 is configured to determine whether or not correspondence information in which a system log and a communication log are associated with each other matches a preset type of attack, and is configured to determine whether or not a target element is violated.

According to such a configuration, the presence or absence of violation is determined on the basis of whether or not the correspondence information matches a type of attack, and thus it is possible to analyze an attack via a network against the vehicle 10 with high accuracy.

(1b) In the above-described embodiment, a configuration of determining whether or not the correspondence information matches a preset type of attack has been exemplified. The correspondence information is information in which a security log and a communication detection log are associated with each other. According to such a configuration, in addition to the security log, the communication detection log including an attack code that is a cause of the actual occurrence of the abnormality and features of malware can be taken into consideration to determine whether or not there is a match in the type of attack. Therefore, it is possible to analyze a cyberattack against a vehicle with high accuracy, as compared with a configuration using only the security log to determine whether or not there is a match in the type of attack.

(1c) In the above-described embodiment, a configuration has been exemplified in which the estimation section 474 updates the predicted abnormality information by using a determination result regarding the correspondence information determined by the violation determination section 472, and determines the similarity between the updated predicted abnormality information and the measured abnormality information to estimate the category of attack. According to such a configuration, it is possible to take into account a tendency of an actual attack, as compared with a case of using the predicted abnormality information as it is without update. Therefore, it is possible to analyze a cyberattack against the vehicle with high accuracy.

(1d) In the above-described embodiment, a configuration has been exemplified in which the inspection section 45 analyzes a communication log and specifies a malicious communication destination and a malicious communication content. According to such a configuration, it is possible to analyze a cyberattack in consideration of a communication destination or a communication content that is a cause of an actual occurrence of an abnormality.

(1e) In the above-described embodiment, a configuration has been exemplified in which the violation determination section 472 can classify a violation likelihood of an ECU of a communication source, on the basis of whether the ECU matches any of a plurality of types of attack. According to such a configuration, for example, processing of changing the predicted abnormality information can be made different according to the violation likelihood. Specifically, by making a difference between an increase rate of a coefficient of a table entry for an ECU determined to have been violated and an increase rate of a coefficient of a table entry for an ECU determined to be highly likely to have been violated, it is possible to generate more reliable predicted abnormality information.

(1f) In the above-described embodiment, a configuration has been exemplified in which a communication detection log and a security log are associated to be synchronized with each other on the basis of a time at which an abnormality included in the security log occurs and a time of communication included in the communication detection log. According to such a configuration, since logs having relatively close times can be associated with each other, it is possible to reduce a possibility that unrelated communication detection logs and security logs are associated with each other.

(1g) In the above-described embodiment, a configuration has been exemplified in which the predicted abnormality information is information in which a position where an abnormality is predicted to occur in the electronic control system 2 in a case where an attack is received is expressed by a coefficient for each category of attack, and a combination of predicted abnormalities can be changed by changing the coefficient. According to such a configuration, a certainty of the combination of predicted abnormalities can be expressed by the coefficient. In addition, by vectorizing the coefficient and calculating a similarity, the similarity can be easily visualized.

(1h) In the above-described embodiment, a configuration has been exemplified in which the electronic control system 2 has a three-layer structure, and the estimation section 474 estimates that other ECUs located in the same layer as an ECU in which an abnormality is predicted to occur have not been violated. According to such a configuration, it becomes clearer that the ECU in which an abnormality is predicted to occur is an attack entrance of the attack, and the predicted abnormality information with higher reliability can be generated.

(1i) In the above-described embodiment, a configuration has been exemplified in which the external vehicle device 4 is installed as an attack analysis device outside the vehicle 10. According to such a configuration, since the attack analysis device receives a security log via a wireless communication network, a processing load on the vehicle 10 side can be reduced as compared with a case where the attack analysis device is installed inside the vehicle 10.

### (2. Second Embodiment)

### (2-1. Difference from First Embodiment)

Since a basic configuration of a second embodiment and subsequent embodiments is similar to that of the first embodiment, differences will be described below. Note that the same reference numerals as those in the first embodiment indicate the same configuration, and reference is made to the preceding description.

The second embodiment is different from the first embodiment in further including communication mediation sections 3m and 3n and a function information DB 48. The communication mediation sections 3m and 3n are configured to mediate communication inside a vehicle. In addition, the second embodiment is different from the first embodiment in that the attack/abnormality relationship table storage section 473 and the estimation section 474 are unnecessary. In the second embodiment, the processing executed by the estimation section 474 is also unnecessary. In the second embodiment, the vehicle log reception section 42 of the external vehicle device 4 receives a communication mediation history from each vehicle 10, and registers the communication mediation history in the vehicle log DB 43.

### (2-2. Configuration)

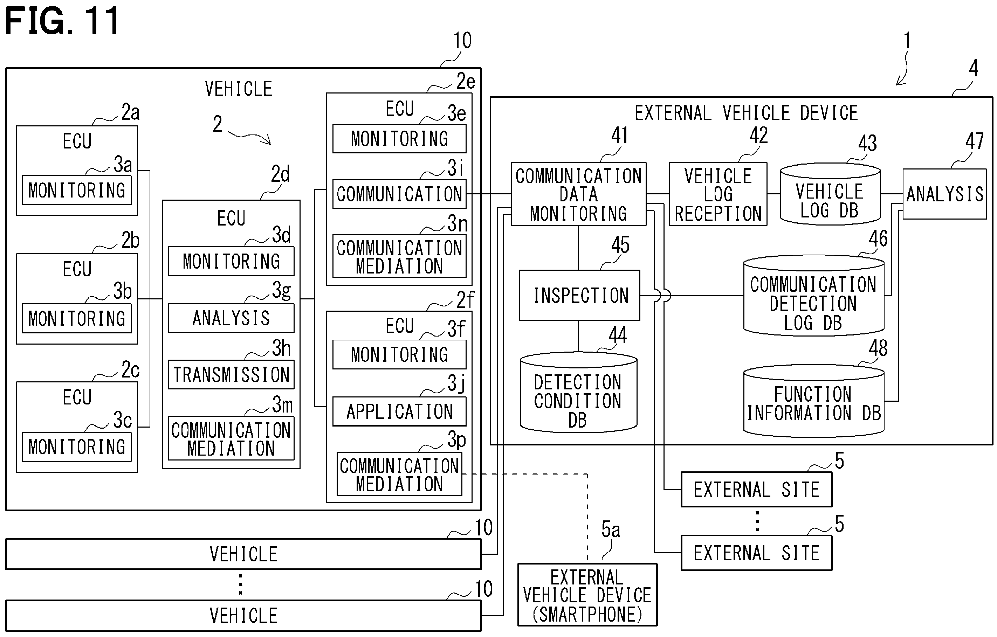

In the second embodiment, as illustrated in FIG. 11, the ECU 2d belonging to a second layer includes the communication mediation section 3m, and the ECU 2e belonging to a first layer includes the communication mediation section 3n. The ECU 2f belonging to the first layer may further include a communication mediation section 3p, and may further include an external vehicle device 5a. The external vehicle device 5a may be configured as a smartphone.

The communication mediation sections 3m and 3n are configured to mediate communication desired by the ECUs 2a to 2c and the like, which are other ECUs, and further perform communication with an outside of the vehicle via the communication section 3i of the ECU 2e and the like, which are other ECUs.

As illustrated in FIG. 11, the function information DB 48 is provided in, for example, the external vehicle device 4. The function information DB 48 is a database that stores what functions are provided (for example, function information to be described later) as functions related to communication of the individual ECUs 2a to 2f and the like in the vehicle 10. The functions related to communication may include information related to a communication protocol, a communication speed, and the like in addition to a communication destination designation function and a communication mediation function to be described later.

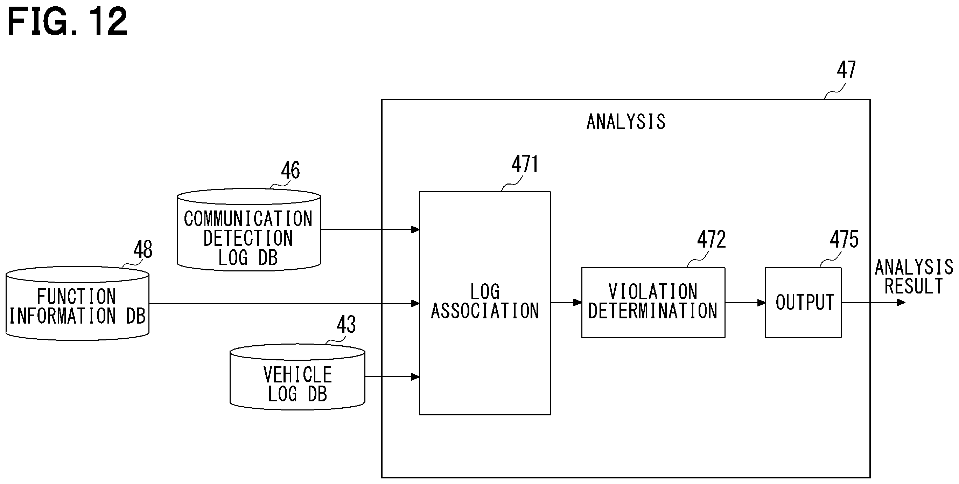

As illustrated in FIG. 12, the log association section 471 associates a log stored in the vehicle log DB 43, a log stored in the communication detection log DB 46, and information stored in the function information DB 48. In the present embodiment, a communication mediation history in the vehicle is included as the log stored in the vehicle log DB 43. In this case, the log stored in the vehicle log DB 43 does not need to include a log of a security sensor.

That is, the present embodiment is configured not to use the log of the security sensor of the vehicle 10. Therefore, even in a case where an abnormality cannot be detected using the security sensor, it can be determined that the communication source has been violated on the basis of a result of a communication detection log as long as the communication detection log can be acquired. The case where the abnormality cannot be detected using the sensor includes a case where the security sensor of the vehicle 10 fails, a case where there is a problem in a design of the security sensor, a case where an attack method is advanced, and the like.

### (2-3. Processing)

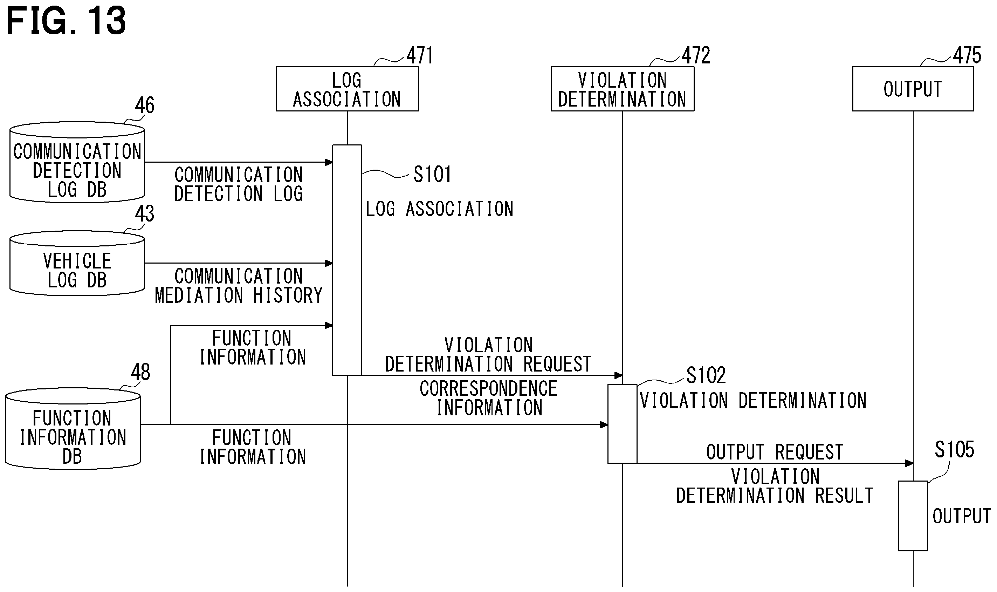

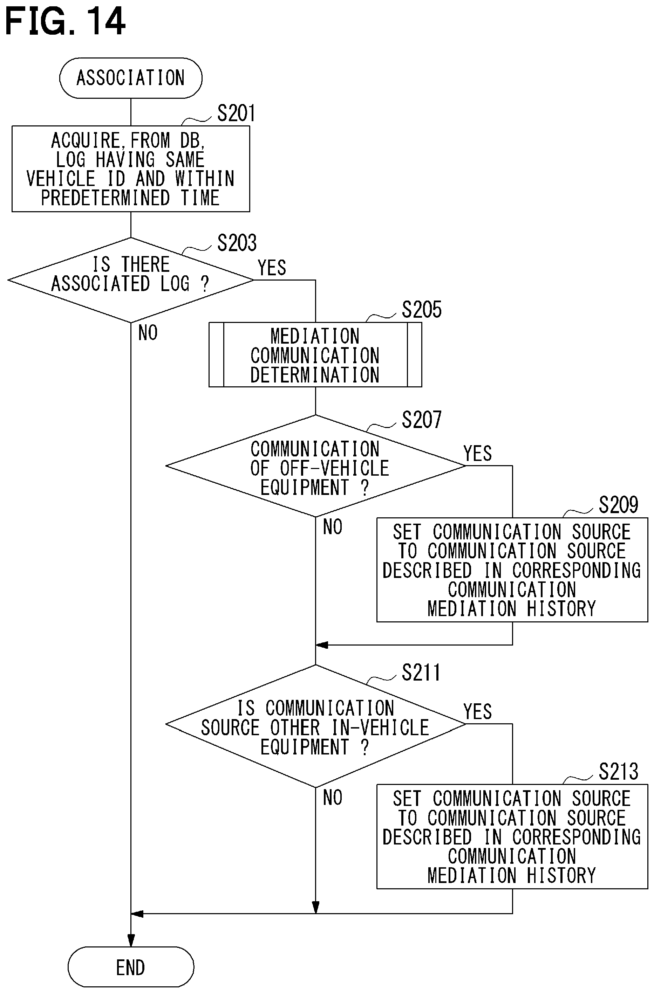

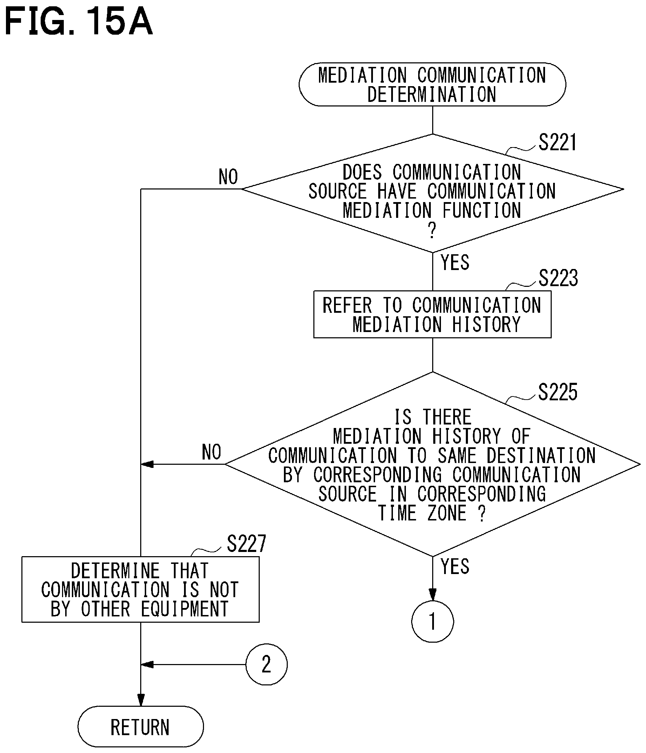

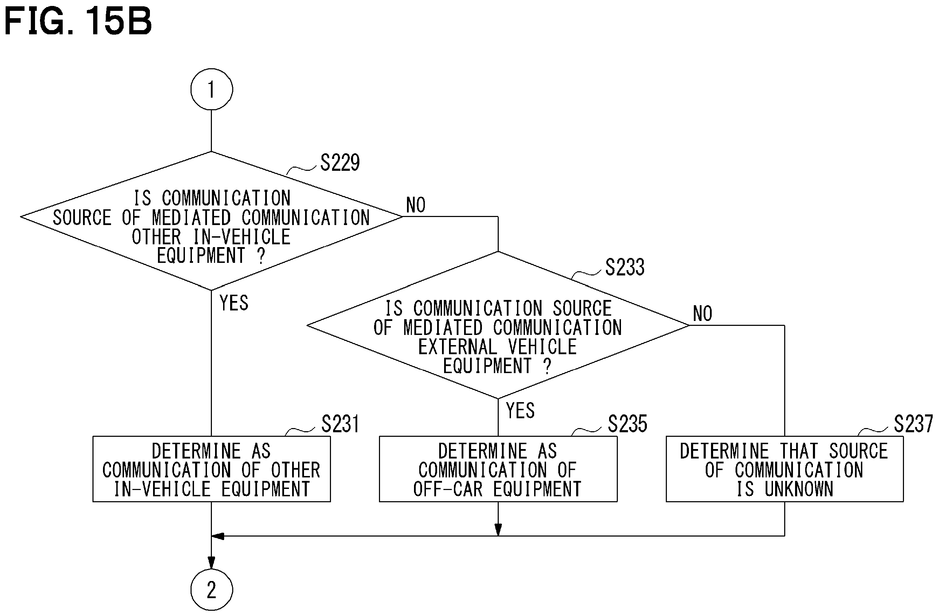

Attack analysis processing performed by the analysis section 47 of the external vehicle device 4 will be described with reference to a sequence illustrated in FIG. 13 and flowcharts illustrated in FIGS. 14, 15A, and 15B (hereinafter, FIGS. 14 to 15B).

First, in S101, the log association section 471 acquires a communication mediation history obtained from the vehicle log DB 43, a communication detection log obtained from the communication detection log DB 46, and function information obtained from the function information DB 48. Then, the log association section 471 associates the communication mediation history, the communication detection log, and the function information with each other, and outputs correspondence information, which is the associated log, to the violation determination section 472. In the first embodiment, correspondence information related to an abnormality that has occurred in a vehicle is output. However, in the second embodiment, the correspondence information that may not include the information related to the abnormality that has occurred in the vehicle is output.

Details of S101 are illustrated in the flowcharts of FIGS. 14 to 15B. FIGS. 14 to 15B are flowcharts illustrating log association processing performed by the analysis section 47 of the external vehicle device 4. Note that, in the log association processing, determination in units of equipment is disclosed as an example, but the present invention is not limited to this configuration. For example, recording and determination may be performed in units of applications operating on the equipment.

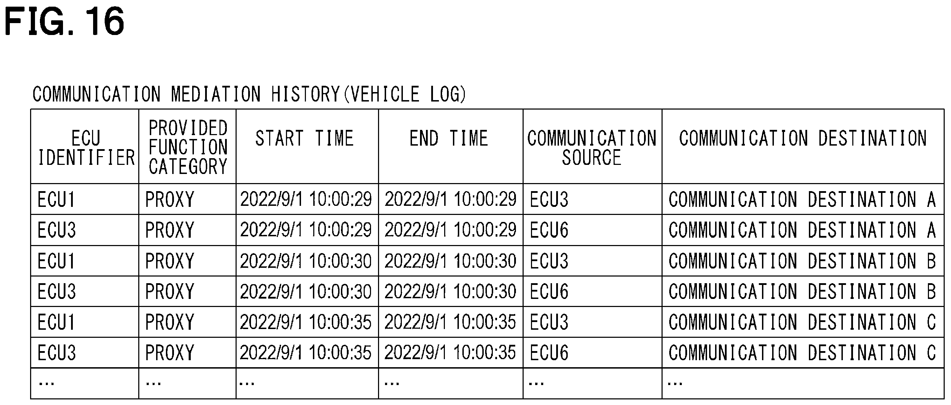

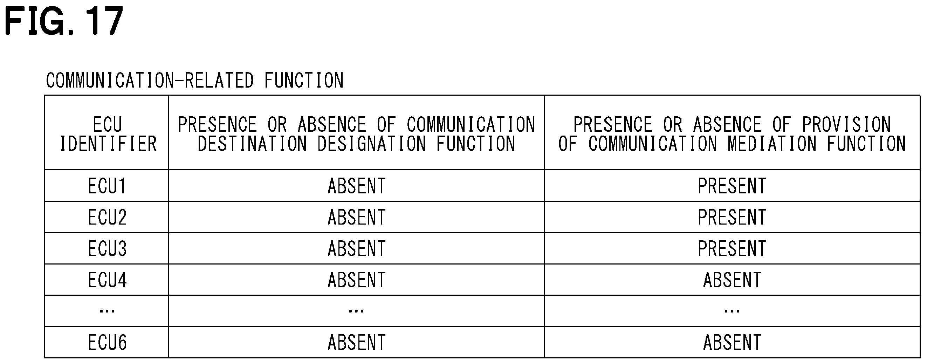

In the log association processing, as illustrated in FIG. 14, the analysis section 47 first acquires logs having the same vehicle ID and within a predetermined time (for example, time frame T1) from each of the DBs 43, 46, and 48 in S201, and performs association. In this processing, first, the communication detection log, the communication mediation history illustrated in FIG. 16, and the function information (for example, the communication-related function) illustrated in FIG. 17 are acquired.

As illustrated in FIG. 16, the communication mediation history includes information such as an ECU identifier, a provided function category, a mediation start time, a mediation end time, a communication source, and a communication destination. That is, the communication mediation history is information indicating from when (start time) to when (end time) mediation of communication from where (communication source) to where (communication destination) is provided by what category of communication mediation function, in an ECU of the corresponding identifier.

In addition, as illustrated in FIG. 17, the function information includes information such as an ECU identifier, presence or absence of the communication destination designation function, presence or absence of provision of a communication mediation function, and the like. Note that the communication destination designation function indicates a function that can designate a communication destination by a person (for example, a user or the like) other than a vendor.

In particular, the vendor includes any of a manufacturer, a supplier, and a seller. In addition, the communication destination designation function includes, for example, an application that allows the user to designate a communication destination such as a browser, an application that allows a third party to designate a communication destination such as a mailer, and the like. In a case where these applications are installed, a function "present" is associated with the equipment. In a case where this function is present, there is a possibility of unintentionally communicating with a malicious communication destination as a result of a user operation.

Furthermore, the communication mediation function corresponds to, for example, a function of mediating communication of other devices such as an access point of Wi-Fi (registered trademark), a function of mediating communication of other ECUs or applications such as a proxy, and the like. In a case where this function is provided, it can be determined that communication by another device or another ECU is highly likely to be a cause, even if communication with a malicious communication destination occurs.

Subsequently, the analysis section 47 determines whether or not there is an associated log in S203 illustrated in FIG. 14. The log here is, for example, a communication detection log which is a result of inspecting information as illustrated in FIG. 10C. If there is no associated log, this processing is terminated. When there is an associated log in S203, this processing proceeds to S205, and the analysis section 47 performs mediation communication determination processing.

The mediation communication determination processing is processing of determining whether or not the communication source ECU has a communication mediation function, and specifying communication source equipment as necessary. In the mediation communication determination processing, as illustrated in FIGS. 15A and 15B, in S221, the analysis section 47 determines whether or not a communication source (hereinafter, may be referred to as a corresponding communication source) described in a communication detection log (for example, the log in FIG. 5A) has the communication mediation function.

In a case where the corresponding communication source does not have the communication mediation function, this processing proceeds to S227 described later. Furthermore, in a case where the corresponding communication source has the communication mediation function, this processing proceeds to S223. Subsequently, in S223, the analysis section 47 refers to the communication mediation history (FIG. 16). Subsequently, in S225, it is determined whether or not there is a mediation history (hereinafter, may be abbreviated as a corresponding mediation history) indicating that communication to the same destination as a communication destination described in the communication detection log is mediated by a communication source corresponding to a corresponding time zone corresponding to a communication time described in the communication detection log.

If there is no corresponding mediation history in S225, this processing proceeds to S227. In this case, in S227, the analysis section 47 determines that communication having a communication content described in the communication detection log is not communication by equipment different from the corresponding communication source, that is, the communication is not communication using the communication mediation function, and the analysis section 47 terminates the mediation communication determination processing.

When the corresponding mediation history is present in S225, this processing proceeds to S229. In this case, in S229, the analysis section 47 determines whether or not a communication source (hereinafter, may be abbreviated as a communication source of communication mediated in the vehicle) of communication mediated by the corresponding communication source is other in-vehicle equipment (that is, equipment that is in the vehicle 10 and is different from the currently recognized communication source). In the example of FIG. 16, the communication source of the communication mediated by the corresponding communication source ECU 1 is ECU 6. This is because, in this example, the communication mediation history indicates that ECU 1 has mediated communication that is mediated by ECU 3 and whose communication source is ECU 6.

If the communication source of the communication mediated in the vehicle is other in-vehicle equipment, this processing proceeds to S231. In this case, in S231, the analysis section 47 determines that communication having a communication content described in the communication detection log is communication of other in-vehicle equipment, and terminates the mediation communication determination processing. If the communication source of the communication mediated in the vehicle is not other in-vehicle equipment in S229, this processing proceeds to S233. In this case, in S233, the analysis section 47 determines whether or not the communication source of the communication mediated in the vehicle is external vehicle equipment (for example, the external vehicle device 5a such as a smartphone).

If the communication source of the communication mediated in the vehicle is external vehicle equipment, this processing proceeds to S235. In this case, in S235, the analysis section 47 determines that communication having a communication content described in the communication detection log is communication of external vehicle equipment, and the analysis section 47 terminates the mediation communication determination processing. If the communication source of the communication mediated in the vehicle is not external vehicle equipment in S233, this processing proceeds to S237. In this case, in S237, the analysis section 47 determines that the source of the communication having the communication content described in the communication detection log is unknown, and the analysis section 47 terminates the mediation communication determination processing.

When the mediation communication determination processing is terminated, this processing returns to FIG. 14 and proceeds to S207. In step S207, the analysis section 47 determines whether or not it is determined in the mediation communication determination processing that the communication source of the communication mediated in the vehicle is external vehicle equipment. If the communication source of the communication mediated in the vehicle is external vehicle equipment, this processing proceeds to S209. In S209, the analysis section 47 sets a source of communication of the communication content indicated in the communication detection log as a communication source described in the corresponding communication mediation history, and processing proceeds to S211.

When the communication source of the communication mediated in the vehicle is not external vehicle equipment in S207, this processing proceeds to S211. In this case, in S211, the analysis section 47 determines whether or not it is determined in the mediation communication determination processing that the communication source of the communication mediated in the vehicle is other in-vehicle equipment. If the communication source of the communication mediated in the vehicle is other in-vehicle equipment, the processing proceeds to S213. In this case, in S213, the analysis section 47 sets a source of communication of the communication content described in the communication detection log as a communication source described in the corresponding communication mediation history, and the analysis section 47 terminates the log association processing. If the communication source of the communication mediated in the vehicle is not other in-vehicle equipment in S211, the mediation communication determination processing is terminated.

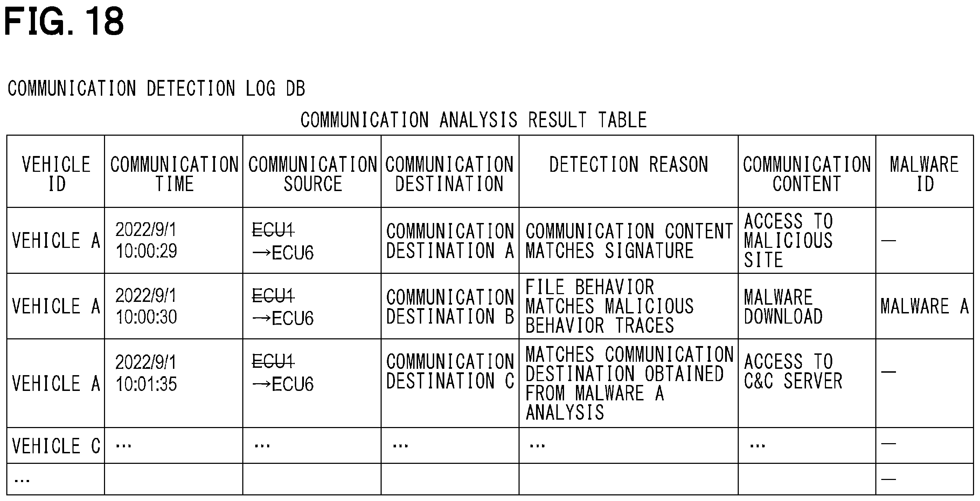

When the processing of S209 or S213 is performed in the communication determination processing described above, the analysis section 47 rewrites the communication analysis result table (that is, the communication detection log included in the correspondence information) as illustrated in FIG. 18, for example. In the communication analysis result table illustrated in FIG. 18, the notation of ECU 1 described as the communication source in the table illustrated in FIG. 5A is rewritten to ECU 6. That is, by mediating communication in the vehicle, ECU 1 that is an apparent communication source is rewritten to ECU 6 that is an actual communication source.

Next, referring back to FIG. 13, in S102, the violation determination section 472 analyzes the correspondence information, and determines a violation likelihood of the communication source ECU. The violation determination section 472 outputs a determination result including the violation likelihood (for example, an estimated category of attack) to the output section 475.

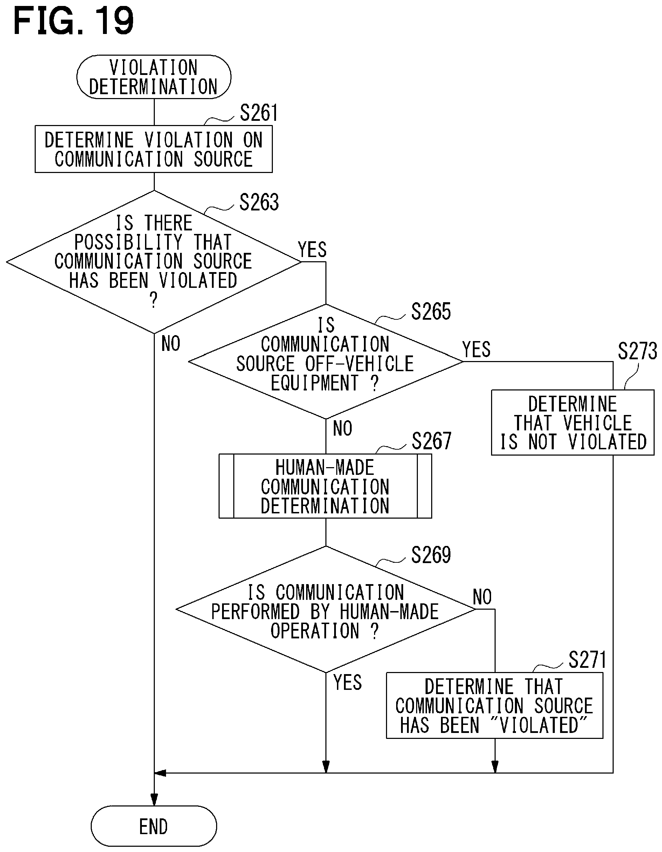

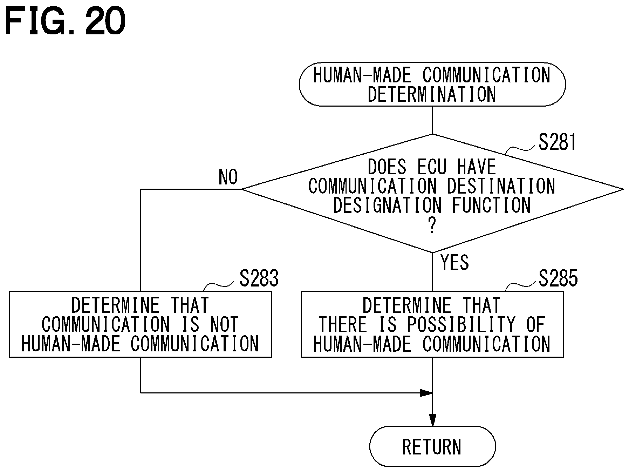

Details of S102 are illustrated in flowcharts of FIGS. 19 and 20. FIGS. 19 and 20 are flowcharts illustrating violation determination processing performed by the analysis section 47 (for example, the violation determination section 472) of the external vehicle device 4. The violation determination processing is performed for each piece of correspondence information. In the violation determination processing, as illustrated in FIG. 19, in S261, the analysis section 47 performs violation determination on the communication source. In this processing, the violation determination is performed on the actual communication source.

Similarly to the first embodiment, the procedure of the violation determination includes: determining whether or not correspondence information including a content of communication of the communication source and information on the communication destination matches any of a plurality of preset types of attack; and determining a violation likelihood of the communication source in accordance with which type of attack the correspondence information matches, in a case where the correspondence information matches any of the plurality of types of attack. The violation likelihood of the communication source includes two classifications: the communication source is highly likely to have been violated; and the communication source has been violated. Since the second embodiment is configured not to use a security log, in the violation determination of the second embodiment, a type that can be determined without using the security log is used among the plurality of types of attack exemplified in the first embodiment.

For this reason, in the second embodiment, in "it is confirmed on the basis of the correspondence information that a behavior confirmed at the time of dynamic analysis has occurred in an ECU" in (B3) described in the first embodiment, determination that requires confirmation that a CAN message designating a suspicious ID is recorded is not performed. In the second embodiment, the ECU in (B1) to (B5) described in the first embodiment is replaced with the communication source. This is because, in the second embodiment, as indicated by presence of determination in S265 described later, it is assumed that the communication source in S261 is not only the ECU but may also be external vehicle equipment such as a smartphone.

In addition, in the second embodiment, (B1) is defined in a broad sense as compared with the first embodiment so as to include a case where communication for downloading malware has occurred from a communication source. The reason for defining in a broad sense as described above is that human-made communication determination is made in S267 described later, in the second embodiment.

Subsequently, in S263, the analysis section 47 determines whether or not there is a possibility that the communication source has been violated. A case where there is a possibility of having been violated is a case where it is determined that the correspondence information matches any of a plurality of preset types of attack, and includes a case of being classified as "violated" and a case of being classified as "highly likely to have been violated". If there is no possibility that the communication source has been violated, this processing is terminated. If there is a possibility that the communication source has been violated, this processing proceeds to S265.

Subsequently, in S265, the analysis section 47 determines whether or not the communication source is external vehicle equipment. If the communication source is external vehicle equipment, this processing proceeds to S273. Then, in S273, the analysis section 47 determines that the vehicle is not violated, and terminates the violation determination processing.

In addition, in S265, if the communication source is not external vehicle equipment, the analysis section 47 proceeds this processing to S267. Subsequently, in S267, the analysis section 47 performs human-made communication determination processing. The human-made communication determination processing is processing of determining whether or not there is a possibility that communication from the communication source is human-made communication.

In the human-made communication determination processing, as illustrated in FIG. 20, in S281, the analysis section 47 determines whether or not the communication source ECU has the communication destination designation function. If there is no communication destination designation function, this processing proceeds to S283. Subsequently, in S283, the analysis section 47 determines that the communication is not human-made communication, and terminates the human-made communication determination processing.

If there is the communication destination designation function in S281, this processing proceeds to S285. Subsequently, in S285, the analysis section 47 determines that there is a possibility of human-made communication, and terminates the human-made communication determination processing.

When the human-made communication determination processing is terminated, this processing returns to FIG. 19 and proceeds to S269. Subsequently, in S269, the analysis section 47 determines whether or not it is determined that the communication is made by a human-made operation (that is, there is a possibility of human-made communication).

If it is determined that the communication is made by a human-made operation, the violation determination processing is terminated. If it is determined that the communication is not made by a human-made operation, this processing proceeds to S271. Subsequently, in S271, the analysis section 47 determines that the communication source has been violated, and the violation determination processing is terminated.

Next, referring back to FIG. 13, in S105, the output section 475 outputs the category of attack to the attack countermeasure device. In the present embodiment, the processing of S103 and S104 illustrated in FIG. 9 can be omitted.

### (2-4. Effects)

According to the second embodiment described in detail above, the effect (1a) of the first embodiment described above is exhibited, and the following effect is further exhibited.

(2a) In the configuration of the second embodiment, the system log includes a history of mediating, in the electronic control system 2, communication between with an outside of the electronic control system 2. The analysis section 47 specifies an occurrence source of communication of the communication detection log from the history, and then determines whether a target element is violated. When an ECU that is the communication source of the communication is an electronic control unit whose communication destination cannot be designated by anyone other than the vendor, the analysis section 47 determines that the target element such as an ECU has a high likelihood of being violated.

For example, when the electronic control system 2 performs communication using, as a transmission source, ECU 6 as the ECU 2c illustrated in FIG. 1, ECU 6 accesses an external site via the ECU 2d and the ECU 2e. A communication content at this time is monitored by the external vehicle device 4, and the above-described log association processing is performed. In the log association processing, as illustrated in FIG. 18, it is recognized that the transmission source is ECU 6. Then, according to the violation determination processing illustrated in FIG. 19, in a case where there is a possibility that the communication source has been violated (YES in S263), the communication source is not external vehicle equipment (NO in S265), and the communication source is not human-made communication (NO in S269), it is determined that ECU 6 is being violated.

Therefore, it is possible to satisfactorily determine that the vehicle 10 has been violated even in the configuration in which communication is mediated.

### (3. Third Embodiment)

### (3-1. Configuration)

The third embodiment provides a configuration in which the electronic control system 2 relays communication performed by the external vehicle device 5a such as a smartphone. Further, in a case where there is a possibility that this communication is malicious communication, it is possible to appropriately determine whether or not the vehicle has been violated.

In the third embodiment, as illustrated in FIG. 11, the ECU 2e belonging to the first layer includes the communication mediation section 3n, and the ECU 2f includes the communication mediation section 3p. The external vehicle device 5a configured as a smartphone is provided. Note that the ECU 2d belonging to the second layer may include the communication mediation section 3m. In the third embodiment, similarly to the second embodiment, the vehicle log reception section 42 of the external vehicle device 4 receives a communication mediation history from each vehicle 10, and registers the communication mediation history in the vehicle log DB 43.

### (3-2. Processing)

The processing in the present embodiment is similar to that in the second embodiment.

### (3-3. Effects)

According to the third embodiment described in detail above, the effect (1a) of the first embodiment described above is exhibited, and the following effect is further exhibited.

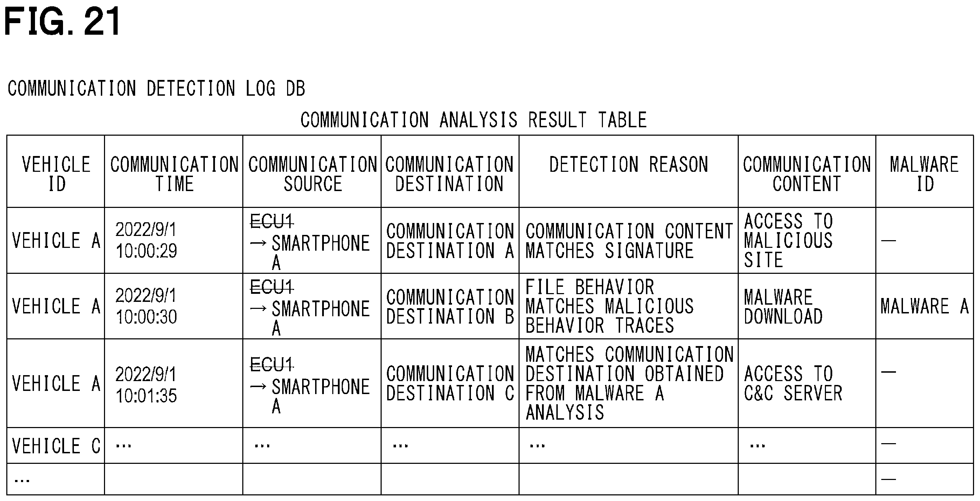

(3a) For example, when the electronic control system 2 performs communication using, as a transmission source, the external vehicle device 5a as a smartphone illustrated in FIG. 11, the external vehicle device 5a accesses an external site via the ECU 2f and the ECU 2e. A communication content at this time is monitored by the external vehicle device 4, and the above-described log association processing is performed. In the log association processing, when the analysis section 47 determines that there is a possibility that communication from the external vehicle device 5a configured as a smartphone is malicious communication, for example, as illustrated in FIG. 21, the communication analysis result table is rewritten.

In the communication analysis result table illustrated in FIG. 21, the notation of ECU 1 described as the communication source in the table illustrated in FIG. 5A is rewritten to Smartphone A. That is, by mediating communication, ECU 1 that is an apparent communication source is rewritten to Smartphone A that is an actual communication source. As a result, it is recognized that the transmission source is the external vehicle device 5a as a smartphone.

Then, in the violation determination processing illustrated in FIG. 19, the processing proceeds after determination that there is a possibility that the communication source has been violated (YES in S263) and that the communication source is external vehicle equipment (YES in S265). In this case, it is determined that the vehicle is not violated. This is because a communication source of malicious communication is a smartphone and is not a vehicle or a component of the vehicle.

That is, in the present embodiment, the analysis section 47 is configured to determine that there is a high possibility that the target element has been subjected to no violation when the communication source of the communication is the external vehicle device 5a.

According to such a configuration, even when the external vehicle device 5a is present, it is possible to appropriately determine whether or not the vehicle 10 is being violated.

### (4. Fourth Embodiment)

### (4-1. Configuration)

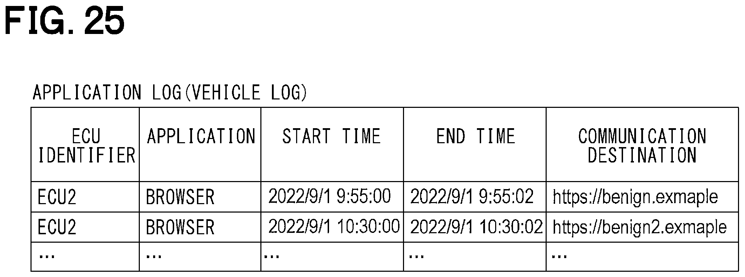

In a fourth embodiment, the vehicle log includes an application log (see FIG. 25). The application log is a log related to an application (for example, the application 3j of the ECU 2f) operating on an ECU, and may include a log related to an application having the communication destination designation function for a communication source. Note that, in the present embodiment, the vehicle log may not include a log of a security sensor.

In the fourth embodiment, the vehicle log reception section 42 of the external vehicle device 4 receives a communication mediation history and the application log from each vehicle 10, and registers the communication mediation history and the application log in the vehicle log DB 43. A configuration similar to the configuration of the third embodiment (see FIG. 11) can be applied to the configuration of the fourth embodiment.

### (4-2. Processing)

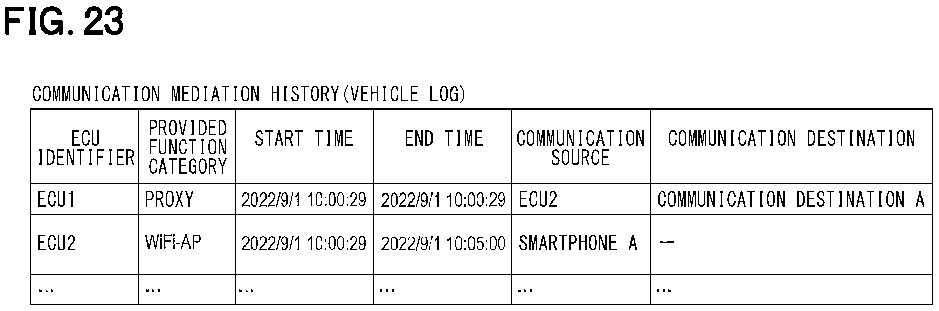

The communication mediation history in the present embodiment is illustrated in FIG. 23, for example. Note that, "-" in FIG. 23 is not a determination target as to whether or not there is a match. The communication mediation history is used to compare a time, a communication source, a communication destination, and the like with those described in the communication log, to make it possible to accurately determine whether or not there is communication mediation.

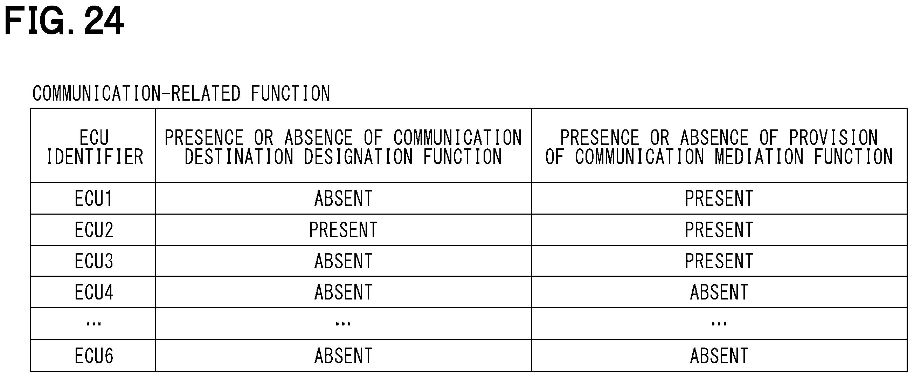

In the present embodiment, as illustrated in FIG. 24, for ECU 2, the communication destination designation function is set to "present" and the communication mediation function is set to "present".

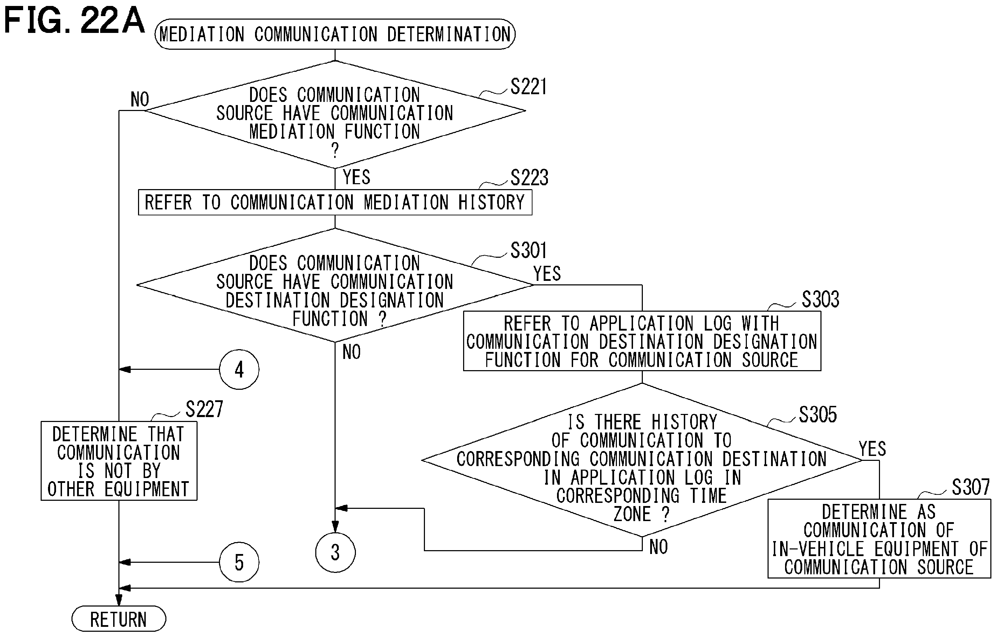

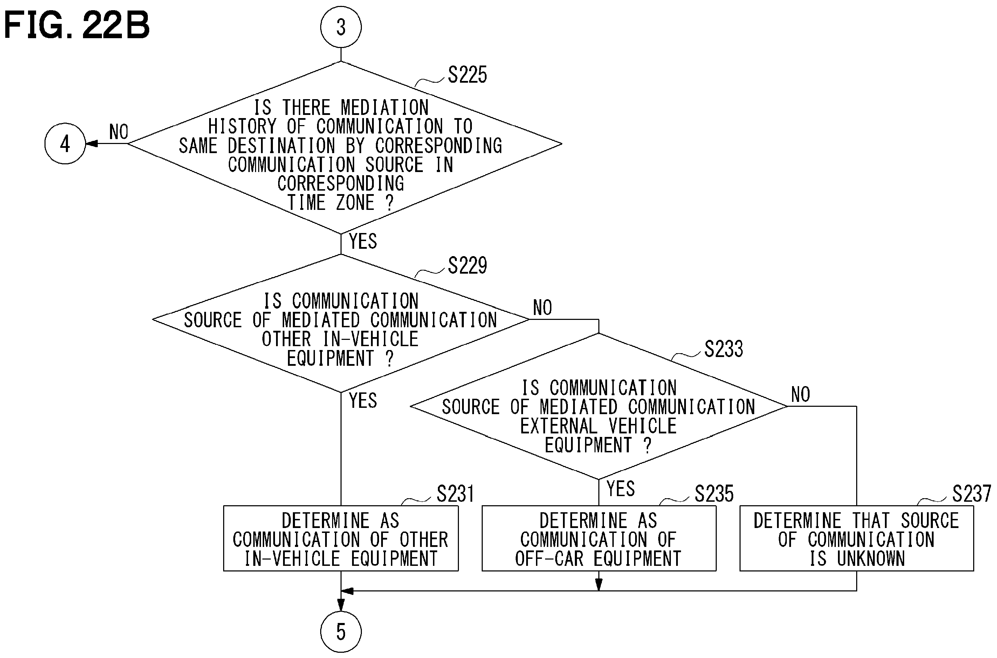

The mediation communication determination processing (see S205 in FIG. 14) in the log association processing of the fourth embodiment is performed as illustrated in the flowcharts of FIGS. 22A and 22B.

In the mediation communication determination processing, in S223, the analysis section 47 refers to the communication mediation history (FIG. 16), and then the processing proceeds to S301. In step S301, the analysis section 47 determines whether or not a communication source having the communication destination designation function is included in the communication mediation history. If there is no communication source having the communication destination designation function, this processing proceeds to step S225 and subsequent steps. If there is a communication source having the communication destination designation function, this processing proceeds to S303. In the example of FIG. 16, the communication source included in the communication mediation history is ECU 3 and ECU 6.

Subsequently, in S303, the analysis section 47 refers to the application log. The application log is a log indicating where the application of the ECU has communicated with. For example, as illustrated in FIG. 25, the application log includes an ECU identifier for identifying an ECU, a category of an application installed in the ECU, a start time, an end time, and a communication destination (for example, URL) of communication of the application, and the like. In step S303, the analysis section 47 refers to an application log indicating to which the communication has been performed by the application installed on the ECU having the ECU identifier corresponding to the communication source that is the communication source included in the communication mediation history and has the communication destination designation function.

Subsequently, in S305, the analysis section 47 determines whether or not there is a history of communication to the corresponding communication destination in the application log in a time zone corresponding to the communication time described in the communication detection log (hereinafter, referred to as first determination in S305). The corresponding communication destination is a communication destination described in the communication detection log, that is, a communication destination included in the communication mediation history. Note that there may be a communication mediation history in which a communication destination is not recorded, as in the communication mediation history of ECU 2 of FIG. 23 (see the communication destination "-" of FIG. 23). In this case, in S305, the analysis section 47 performs second determination in which the communication destination is excluded from the determination target. Specifically, in S305, the analysis section 47 performs the second determination to determine whether or not there is the application log in a time zone corresponding to the communication time described in the communication detection log. If affirmative determination is made in at least one of the first determination or the second determination in S305, this processing proceeds to S307. If affirmative determination is not made in at least one of the first determination or the second determination in S305, this processing proceeds to S225 and subsequent steps. Subsequently, in S307, the analysis section 47 determines that communication having a communication content described in the communication detection log is communication of an in-vehicle equipment that is a communication source included in the communication mediation history and is a communication source having the communication destination designation function, and the analysis section 47 terminates the mediation communication determination processing.

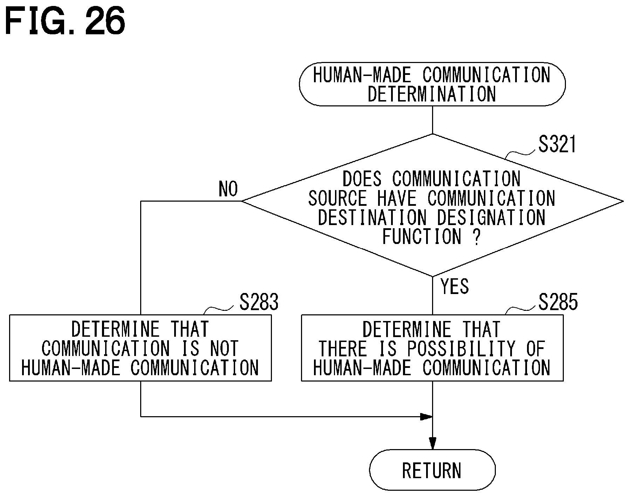

In addition, in the human-made communication determination processing in the log association processing in the present embodiment, processing as illustrated in FIG. 26 may be performed.

In the human-made communication determination processing, in S321, the analysis section 47 determines whether or not the communication source has the communication destination designation function. If there is no communication destination designation function, this processing proceeds to S283. Subsequently, in S283, the analysis section 47 determines that the communication is not human-made communication, and terminates the human-made communication determination processing.

If there is the communication destination designation function in S321, this processing proceeds to S285. Subsequently, in S285, the analysis section 47 determines that there is a possibility of human-made communication, and terminates the human-made communication determination processing.

### (4-3. Effects)

According to the fourth embodiment described in detail above, the effect (1a) of the first embodiment described above is exhibited, and the following effect is further exhibited.

(4a) In the present embodiment, on the ECU 2f of the electronic control system 2 illustrated in FIG. 11, the communication mediation section 3p and the application 3j are operating. The communication mediation section 3p mediates communication from, as a transmission source, the external vehicle device 5a that is a smartphone, and the application 3j performs communication using the ECU 2f as a transmission source operate. Even when the communication destination of the smartphone is not recorded in the communication mediation section 3p as illustrated in FIG. 23, the application log of the application 3j is recorded as illustrated in FIG. 25. According to such a configuration, it is possible to distinguish a generation source of the communication by using the application log.

Accordingly, when the smartphone is a source of malicious communication, it is determined that the vehicle is not violated. This is because the smartphone is not a vehicle or a component of the vehicle.

In a case where the application 3j is the source of malicious communication and the communication destination designation function is "absent", it is determined that the vehicle is violated. This is because the fact is indicated in which malicious communication has occurred even though the communication destination cannot be designated by human, and there is a high possibility that the communication has occurred since the communication is violated by the attack.

### (5. Fifth Embodiment)

### (5-1. Configuration)

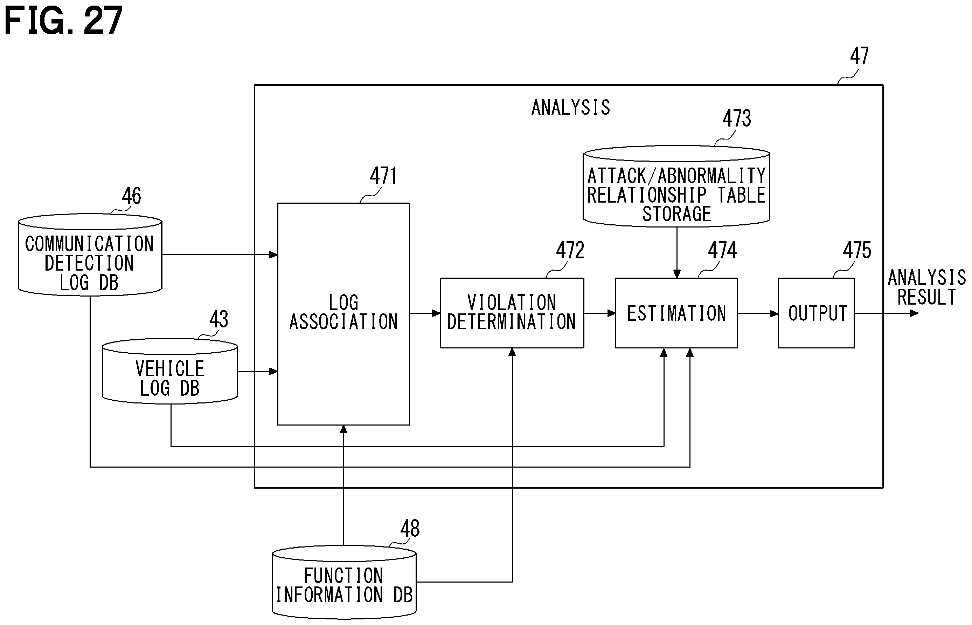

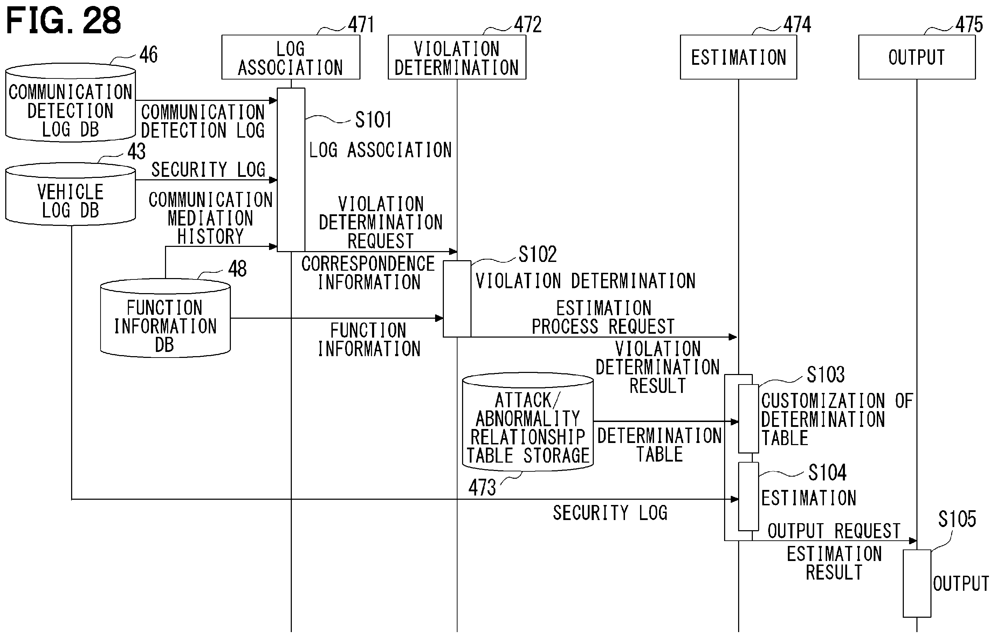

A basic configuration of a fifth embodiment is a combination of the first embodiment and the second embodiment. That is, as illustrated in FIGS. 27 and 28, in the fifth embodiment, the function information DB 48 is provided, and the log association section 471 performs log association processing using a communication detection log, a vehicle log (a security log, a communication mediation history), and function information. In addition, the violation determination section 472 performs violation determination processing using correspondence information and function information. In the fifth embodiment, the vehicle log reception section 42 of the external vehicle device 4 receives a communication mediation history and a security log from each vehicle 10, and registers the communication mediation history and the security log in the vehicle log DB 43.

In the present embodiment, in addition to (A1) to (A3) described above, the log association section 471 may associate the individual logs from the following viewpoints.

(A4) The communication is mediation communication. In this case, whether or not the communication is the mediation communication is determined on the basis of the communication mediation history. In a case of the mediation communication, the communication source is changed to the communication source described in the corresponding communication mediation history.

In addition, in the present embodiment, the violation determination section 472 performs the following processing on a log received from the log association section 471, and performs violation determination on a communication source ECU and a virtual machine (VM). In the violation determination, for example, in addition to the determination described above, the following determination is made.

It is determined that the ECU or the VM in which communication for downloading malware has occurred is highly likely to have been violated.

In the case of "being highly likely to have been violated", when the communication is from the ECU or the VM that is not provided with the communication destination designation function, it is determined that the ECU or the VM is violated.

When the communication source is external vehicle equipment, it is determined that the vehicle is not violated.

### (5-2. Effects)

According to the fifth embodiment described in detail above, the effect (1a) of the first embodiment described above is exhibited, and the following effect is further exhibited.

(5a) In both a case where communication is mediated and a case where communication is not mediated, it is possible to satisfactorily determine that the vehicle 10 has been violated.

### (6. Correspondence)

In the present embodiment, the external vehicle device 4 corresponds to an example of an attack analysis device, the security log corresponds to an example of an abnormality log, and the analysis section 47 (for example, the violation determination section 472) corresponds to an example of a determination section.

### (7. Other Embodiments)

Although the embodiments of the present disclosure have been described above, it is needless to say that the present disclosure is not limited to the above-described embodiments, and can take various forms.

(7b) In the above-described embodiment, a configuration has been exemplified in which the violation determination section 472 determines a case of having been violated and a case of being highly likely to have been violated. However, the violation likelihood determined by the violation determination section 472 may include other patterns. For example, if the inspection section 45 determines that there is no abnormality in the communication log, the violation determination section 472 may determine that there has been no violation.

(7c) In the above-described embodiment, a configuration has been exemplified in which the communication destination analysis section 452 of the inspection section 45 performs the communication destination analysis, and the communication content analysis section 453 of the inspection section 45 performs the communication content analysis, to specify a malicious communication destination and a malicious communication content. However, the inspection section 45 may be configured to specify at least one of the malicious communication destination or the malicious communication content. That is, the inspection section 45 may be configured to execute only one of the communication destination analysis or the communication content analysis.

(7d) Functions of one component in the above-described embodiment may be distributed as a plurality of components, or functions of a plurality of components may be integrated into one component. A part of the configuration of the above-described embodiment may be omitted. At least a part of a configuration of the above-described embodiment may be added to or replaced with a configuration of another above-described embodiment.

(7e) In the above-described embodiment, a configuration has been exemplified in which the vehicle log reception section 42 receives the communication mediation history recorded in the vehicle 10, to specify the communication source. However, when a communication protocol used when the vehicle 10 communicates with the outside of the vehicle is a protocol that can include the communication mediation history in communication data, the communication data monitoring section 41 may receive the communication mediation history included in the communication data. For example, in a case where the communication data monitoring section 41 is a proxy, and the vehicle 10 uses a hypertext transfer protocol (HTTP) protocol to communicate with the outside of the vehicle, a communication source may be described in an X-Forwarded-For (XFF) header defined in the HTTP protocol, and the communication data monitoring section 41 may refer to the header to specify the communication source.

(7f) In addition to the attack analysis device described above, the present disclosure can be implemented in various forms such as a system including the attack analysis device as a component, a program for causing a computer to function as the attack analysis device, a medium recording the program, and an attack analysis method.

## Claims

1. An attack analysis device (47) configured to analyze an attack against an electronic control system (2) constructed in a vehicle (10), the attack being against the electronic control system (2) via a network, the attack analysis device (47) comprising:
a determination section (472, S102) configured to
determine whether correspondence information matches a preset type of the attack, and
determine whether a target element representing at least one of the electronic control system (2) or a component of the electronic control system (2) has been violated,
**characterized in that**
the correspondence information is obtained by associating a system log that is a log generated by the electronic control system (2) constructed in the vehicle (10) with a communication log that is a log of communication between the electronic control system (2) and a communication destination located outside of the vehicle (10), the communication log being generated by an external vehicle device (4) that is located outside the vehicle (10) and relays and monitors the communication.

2. The attack analysis device (47) according to claim 1, wherein
the system log includes a history of mediating, in the electronic control system (2), communication between the electronic control system (2) and the outside of the electronic control system (2), and
the determination section (472, S102) is configured to specify a source of communication of the communication log from the history, and to determine whether the target element is violated.

3. The attack analysis device (47) according to claim 1 or 2, wherein
the determination section (472, S102) is configured to determine that the target element has a high likelihood of being violated in a case where an electronic control unit (2a, 2b, 2c, 2d, 2e) that is a communication source of the communication is an electronic control unit (2a, 2b, 2c, 2d, 2e) whose communication destination is unable to be designated by anyone other than a vendor.

4. The attack analysis device (47) according to any one of claims 1 to 3, wherein
the determination section (472, S102) is configured to determine that there is a high possibility that the target element has been subjected to no violation in a case where a communication source of the communication is an external vehicle equipment.

5. The attack analysis device (47) according to any one of claims 1 to 4, wherein
the system log includes an abnormality log indicating an abnormality detected by the electronic control system (2), and
the attack analysis device (47) further comprises
an estimation section (474, S103, S104) configured to estimate a category of the attack by determining a similarity between: measured abnormality information generated on a basis of the abnormality log and indicating a combination of the abnormality actually detected; and predicted abnormality information indicating a combination of abnormalities predicted to occur in the electronic control system (2) when the attack is received, for each category of the attack.

6. The attack analysis device (47) according to claim 5, wherein
in the predicted abnormality information, a combination of predicted abnormalities can be changed by using the correspondence information determined by the determination section (472, S102) to match a type of the attack.

7. The attack analysis device (47) according to claim 6, further comprising:
an inspection section (45) configured to analyze the communication log, and specify at least one of a malicious communication destination or a malicious communication content,
wherein
the communication log of the correspondence information includes at least one of a malicious communication destination or a malicious communication content.

8. The attack analysis device (47) according to any one of claims 1 to 7, wherein
the determination section (472, S102) is configured to specify a position where an abnormality has occurred in the electronic control system (2) on a basis of whether the correspondence information matches any of a plurality of types of the attack, and is capable of classifying whether the position where the abnormality has occurred is a position violated by the attack or a position highly likely to have been violated by the attack.

9. The attack analysis device (47) according to any one of claims 6 to 8, wherein
the abnormality log and the communication log are associated to be synchronized with each other on a basis of a time at which an abnormality included in the abnormality log occurs and a time of communication included in the communication log.

10. The attack analysis device (47) according to any one of claims 6 to 9, wherein
the predicted abnormality information is information that expresses, with a coefficient, a position where an abnormality is predicted to occur in the electronic control system (2) when the attack is received, for each category of the attack, and
in the predicted abnormality information, a combination of predicted abnormalities can be changed by changing the coefficient.

11. The attack analysis device (47) according to any one of claims 6 to 10, wherein:
the electronic control system (2) includes a plurality of electronic control units (2a, 2b, 2c, 2d, 2e), and has a layer structure in which each of the plurality of electronic control units (2a, 2b, 2c, 2d, 2e) is associated with any of a plurality of layers prepared in advance; and
the estimation section (474, S103, S104) is configured to estimate that another electronic control unit (2a, 2b, 2c, 2d, 2e) located in a layer same as a layer of an electronic control unit (2a, 2b, 2c, 2d, 2e) in which an abnormality is predicted to occur has been subjected to no violation, the electronic control unit (2a, 2b, 2c, 2d, 2e) being indicated by the correspondence information determined by the determination section (472, S102) to match a type of the attack.

12. The attack analysis device (47) according to claim 1, wherein:
the system log includes a history of communication mediation by a communication mediation function in the electronic control system (2), indicating mediation of communication from where to where was provided by the communication mediation function; and
the determination unit is configured to determine whether a source of the communication described in the communication log has the communication mediation function, and upon specifying that the source of the communication described in the communication log has the communication mediation function, refer to the history of communication mediation to determine which equipment is a source of the communication with the communication destination located outside of the vehicle (10) in order to determine whether the target element representing at least one of the electronic control system (2) or the component of the electronic control system (2) has been violated.

13. An attack analysis method for analyzing an attack via a network against an electronic control system (2) constructed in a vehicle (10), the attack analysis method comprising:
determining (472, S102) whether correspondence information matches a preset type of the attack; and
determining whether a target element representing at least one of the electronic control system (2) or a component of the electronic control system (2) has been violated.
**characterized in that**
the correspondence information is obtained by associating a system log that is a log generated by the electronic control system (2) constructed in the vehicle (10) with a communication log that is a log of communication between the electronic control system (2) and a communication destination located outside of the vehicle (10), the communication log being generated by an external vehicle device (4) that is located outside the vehicle (10) and relays and monitors the communication.

14. An attack analysis program for causing a computer to implement a function, the computer being configured to analyze an attack via a network against an electronic control system (2) constructed in a vehicle (10), the attack analysis program causing the computer to implement:
a function of determining (472, S102) whether correspondence information matches a preset type of the attack, the correspondence information being obtained by associating a system log that is a log of the electronic control system (2) with a communication log that is a log of communication between the electronic control system (2) and an outside of the vehicle (10); and determining whether a target element representing at least one of the electronic control system (2) or a component of the electronic control system (2) has been violated,
**characterized in that**
the correspondence information is obtained by associating a system log that is a log generated by the electronic control system (2) constructed in the vehicle (10) with a communication log that is a log of communication between the electronic control system (2) and a communication destination located outside of the vehicle (10), the communication log being generated by an external vehicle device (4) that is located outside the vehicle (10) and relays and monitors the communication.

## Patentansprüche

1. Angriffsanalysevorrichtung (47), die so konfiguriert ist, dass die einen Angriff auf ein in einem Fahrzeug (10) eingebautes elektronisches Steuerungssystem (2) analysiert, wobei der Angriff auf das elektronische Steuerungssystem (2) über ein Netzwerk gerichtet wird, wobei die Angriffsanalysevorrichtung (47) umfasst:
einen Bestimmungsabschnitt (472, S102), der konfiguriert ist,
zu bestimmen, ob Entsprechungsinformationen mit einem voreingestellten Typ des Angriffs übereinstimmen, und
zu bestimmen, ob ein Zielelement, das mindestens eines aus dem elektronischen Steuerungssystem (2) oder einer Komponente des elektronischen Steuerungssystems (2) repräsentiert, verletzt wurde,
**dadurch gekennzeichnet, dass**
die Entsprechungsinformationen erhalten werden, indem ein Systemprotokoll, das vom im Fahrzeug (10) eingebauten elektronischen Steuerungssystem (2) erzeugt wird, einem Kommunikationsprotokoll zugeordnet ist, das ein Protokoll einer Kommunikation zwischen dem elektronischen Steuerungssystem (2) und einem außerhalb des Fahrzeugs (10) befindlichen Kommunikationsziel ist, wobei das Kommunikationsprotokoll von einer externen Fahrzeugvorrichtung (4) erzeugt wird, die sich außerhalb des Fahrzeugs (10) befindet und die Kommunikation weiterleitet und überwacht.

2. Angriffsanalysevorrichtung (47) nach Anspruch 1, wobei
das Systemprotokoll eine Historie einer Mediation einer Kommunikation zwischen dem elektronischen Steuerungssystem (2) und der Außenseite des elektronischen Steuerungssystems (2) enthält, und
der Bestimmungsabschnitt (472, S102) so konfiguriert ist, dass er eine Kommunikationsquelle des Kommunikationsprotokolls aus der Historie spezifiziert und bestimmt, ob das Zielelement verletzt ist.

3. Angriffsanalysevorrichtung (47) nach Anspruch 1 oder 2, wobei
der Bestimmungsabschnitt (472, S102) ist so konfiguriert, dass er bestimmt, dass das Zielelement mit hoher Wahrscheinlichkeit verletzt ist, wenn es sich bei einer elektronischen Steuereinheit (2a, 2b, 2c, 2d, 2e), die eine Kommunikationsquelle der Kommunikation ist, um eine elektronische Steuereinheit (2a, 2b, 2c, 2d, 2e) handelt, deren Kommunikationsziel von niemand anderem als einem Anbieter festgelegt werden kann.

4. Angriffsanalysevorrichtung (47) nach einem der Ansprüche 1 bis 3, wobei
der Bestimmungsabschnitt (472, S102) so konfiguriert ist, dass er bestimmt, dass dass das Zielelement mit einer hohen Wahrscheinlichkeit keiner Verletzung unterzogen wurde, wenn eine Kommunikationsquelle der Kommunikation ein externes Fahrzeuggerät ist.

5. Angriffsanalysevorrichtung (47) nach einem der Ansprüche 1 bis 4, wobei
das Systemprotokoll ein Anomalieprotokoll enthält, das eine vom elektronischen Steuerungssystem (2) erfasste Anomalie anzeigt, und
die Angriffsanalysevorrichtung (47) ferner umfasst:
einen Schätzabschnitt (474, S103, S104), der so konfiguriert ist, dass er eine Kategorie des Angriffs schätzt, indem er eine Ähnlichkeit zwischen Folgendem bestimmt: gemessenen Anomalieinformationen, die auf der Grundlage des Anomalieprotokolls erzeugt werden und eine Kombination der tatsächlich erfassten Anomalie anzeigen; und vorhergesagten Anomalieinformationen, die eine Kombination von Anomalien anzeigen, die voraussichtlich im elektronischen Steuerungssystem (2) auftreten werden, wenn der Angriff empfangen wird, für jede Kategorie des Angriffs.

6. Angriffsanalysevorrichtung (47) nach Anspruch 5, wobei
In den vorhergesagten Anomalieinformationen eine Kombination vorhergesagter Anomalien durch Verwendung der durch den Bestimmungsabschnitt (472, S102) bestimmten Entsprechungsinformationen so geändert werden kann, dass sie mit einem Typ des Angriffs übereinstimmen.

7. Angriffsanalysevorrichtung (47) nach Anspruch 6, ferner umfassend:
einen Inspektionsabschnitt (45), der so konfiguriert ist, dass er das Kommunikationsprotokoll analysiert und mindestens eines aus einem bösartigen Kommunikationsziel oder einem bösartigen Kommunikationsinhalt spezifiziert,
wobei
das Kommunikationsprotokoll der Entsprechungsinformationen mindestens eines aus einem einem bösartigen Kommunikationsziel oder einem bösartigen Kommunikationsinhalt enthält.

8. Angriffsanalysevorrichtung (47) nach einem der Ansprüche 1 bis 7, wobei
der Bestimmungsabschnitt (472, S102) so konfiguriert ist, dass er eine Position, an der eine Anomalie im elektronischen Steuerungssystem (2) aufgetreten ist, basierend darauf spezifiziert, ob die Entsprechungsinformationen mit irgendeinem von mehreren Typen des Angriffs übereinstimmen, und in der Lage ist zu klassifizieren, ob es sich bei der Position, an der die Anomalie aufgetreten ist, um eine Position handelt, die durch den Angriff verletzt wurde, oder um eine Position handelt, die mit hoher Wahrscheinlichkeit durch den Angriff verletzt wurde.

9. Angriffsanalysevorrichtung (47) nach einem der Ansprüche 6 bis 8, wobei
das Anomalieprotokoll und das Kommunikationsprotokoll so zugeordnet sind, dass sie auf der Grundlage einer Zeit, zu der eine im Anomalieprotokoll erfasste Anomalie auftritt, und einer Zeit einer im Kommunikationsprotokoll enthaltenen Kommunikation miteinander synchronisiert werden.

10. Angriffsanalysevorrichtung (47) nach einem der Ansprüche 6 bis 9, wobei
die vorhergesagten Anomalieinformationen Informationen sind, die mit einem Koeffizienten die Position angeben, an der im elektronischen Steuerungssystem (2) vorhergesagt eine Anomalie auftritt, wenn der Angriff empfangen wird, und für jede Kategorie des Angriffs, und
in den vorhergesagten Anomalieinformationen eine Kombination vorhergesagter Anomalien durch Änderung des Koeffizienten verändert werden kann.

11. Angriffsanalysevorrichtung (47) nach einem der Ansprüche 6 bis 10, wobei
das elektronische Steuerungssystem (2) mehrere elektronische Steuereinheiten (2a, 2b, 2c, 2d, 2e) umfasst und eine Schichtstruktur aufweist, in der jede der elektronischen Steuereinheiten (2a, 2b, 2c, 2d, 2e) einer von mehreren im Voraus erstellten Schichten zugeordnet ist; und
der Schätzabschnitt (474, S103, S104) so konfiguriert ist, dass er schätzt, dass eine andere elektronische Steuereinheit (2a, 2b, 2c, 2d, 2e), die sich in derselben Schicht wie eine elektronische Steuereinheit (2a, 2b, 2c, 2d, 2e) befindet, für die ein Auftreten einer Anomalie geschätzt wird, keiner Verletzung unterzogen wurde, wobei die elektronische Steuereinheit (2a, 2b, 2c, 2d, 2e) durch die Entsprechungsinformationen, die durch den Bestimmungsabschnitt (472, S102) bestimmt werden, als mit einem Typ des Angriffs übereinstimmend angezeigt wird.

12. Angriffsanalysevorrichtung (47) nach Anspruch 1, wobei
das Systemprotokoll eine Historie einer Kommunikationsmediation durch eine Kommunikationsmediationsfunktion im elektronischen Steuerungssystem (2) enthält, die angibt, von wo nach wo die Kommunikationsmediation durch die Kommunikationsmediationsfunktion erfolgte; und
die Bestimmungseinheit so konfiguriert ist, dass sie bestimmt, ob eine im Kommunikationsprotokoll beschriebene Kommunikationsquelle über die Kommunikationsmediationsfunktion verfügt, und sobald sie bestimmt, dass die im Kommunikationsprotokoll beschriebene Kommunikationsquelle über die Kommunikationsmediationsfunktion verfügt, die Historie der Kommunikationsmediation heranzieht, um zu bestimmen, welches Gerät eine Quelle der Kommunikation mit dem außerhalb des Fahrzeugs (10) befindlichen Kommunikationsziel ist, um zu bestimmen, ob das Zielelement, das mindestens eines aus dem elektronischen Steuerungssystem (2) oder einer Komponente des elektronischen Steuerungssystems (2) repräsentiert, verletzt wurde.

13. Angriffsanalyseverfahren zur Analyse eines Angriffs über ein Netzwerk auf ein in einem Fahrzeug (10) eingebautes elektronisches Steuerungssystem (2), wobei das Angriffsanalyseverfahren umfasst:
Bestimmen (472, S102), ob Entsprechungsinformationen mit einem voreingestellten Typ des Angriffs übereinstimmen; und
Bestimmen, ob ein Zielelement, das mindestens eines aus dem elektronischen Steuerungssystem (2) oder einer Komponente des elektronischen Steuerungssystems (2) repräsentiert, verletzt wurde,
**dadurch gekennzeichnet, dass**
die Entsprechungsinformationen erhalten werden, indem ein Systemprotokoll, das vom im Fahrzeug (10) eingebauten elektronischen Steuerungssystem (2) erzeugt wird, einem Kommunikationsprotokoll zugeordnet wird, das ein Protokoll einer Kommunikation zwischen dem elektronischen Steuerungssystem (2) und einem außerhalb des Fahrzeugs (10) befindlichen Kommunikationsziel ist, wobei das Kommunikationsprotokoll von einer externen Fahrzeugvorrichtung (4) erzeugt wird, die sich außerhalb des Fahrzeugs (10) befindet und die Kommunikation weiterleitet und überwacht.

14. Angriffsanalyseprogramm, das einen Computer dazu veranlasst, eine Funktion auszuführen, wobei der Computer so konfiguriert ist, dass er einen Angriff über ein Netzwerk auf ein in einem Fahrzeug (10) eingebautes elektronisches Steuerungssystem (2) analysiert, wobei das Angriffsanalyseprogramm, den Computer dazu veranlasst Folgendes zu implementieren:
eine Funktion zum Bestimmen (472, S102), ob Entsprechungsinformationen mit einer voreingestellten Typ des Angriffs übereinstimmen, wobei die Entsprechungsinformationen durch Zuordnen eines Systemprotokolls, das ein Protokoll des elektronischen Steuerungssystems (2) ist, zu einem Kommunikationsprotokoll, das ein Protokoll einer Kommunikation zwischen dem elektronischen Steuerungssystem (2) und einer Außenseite des Fahrzeugs (10) ist, erhalten werden; und zum Bestimmen, ob ein Zielelement, das mindestens eines aus dem elektronischen Steuerungssystem (2) oder einer Komponente des elektronischen Steuerungssystems (2) repräsentiert, verletzt wurde,
**dadurch gekennzeichnet, dass**
die Entsprechungsinformationen erhalten werden, indem ein Systemprotokoll, das vom im Fahrzeug (10) eingebauten elektronischen Steuerungssystem (2) erzeugt wird, einem Kommunikationsprotokoll zugeordnet wird, das ein Protokoll einer Kommunikation zwischen dem elektronischen Steuerungssystem (2) und einem außerhalb des Fahrzeugs (10) befindlichen Kommunikationsziel ist, wobei das Kommunikationsprotokoll von einer externen Fahrzeugvorrichtung (4) erzeugt wird, die sich außerhalb des Fahrzeugs (10) befindet und die Kommunikation weiterleitet und überwacht.

## Revendications

1. Dispositif d'analyse d'attaque (47) configuré pour analyser une attaque contre un système de commande électronique (2) construit dans un véhicule (10), l'attaque étant dirigée contre le système de commande électronique (2) via un réseau, le dispositif d'analyse d'attaque (47) comprenant :
une section de détermination (472, 5102) configurée pour
déterminer si des informations de correspondance coïncident avec un type prédéfini de l'attaque, et
déterminer si un élément cible représentant au moins un parmi le système de commande électronique (2) ou un composant du système de commande électronique (2) a été violé,
**caractérisé en ce que**
les informations de correspondance sont obtenues en associant un journal système qui est un journal généré par le système de commande électronique (2) construit dans le véhicule (10) à un journal de communication qui est un journal de communication entre le système de commande électronique (2) et une destination de communication située à l'extérieur du véhicule (10), le journal de communication étant généré par un dispositif de véhicule externe (4) qui est situé à l'extérieur du véhicule (10) et relaie et surveille la communication.

2. Dispositif d'analyse d'attaque (47) selon la revendication 1, dans lequel
le journal système inclut un historique de médiation, dans le système de commande électronique (2), d'une communication entre le système de commande électronique (2) et l'extérieur du système de commande électronique (2), et
la section de détermination (472, S102) est configurée pour spécifier une source de communication du journal de communication à partir de l'historique, et pour déterminer si l'élément cible est violé.

3. Dispositif d'analyse d'attaque (47) selon la revendication 1 ou 2, dans lequel
la section de détermination (472, S102) est configurée pour déterminer que l'élément cible présente une forte probabilité d'être violé dans un cas où une unité de commande électronique (2a, 2b, 2c, 2d, 2e) qui est une source de communication de la communication est une unité de commande électronique (2a, 2b, 2c, 2d, 2e) dont la destination de communication ne peut pas être désignée par une autre personne qu'un vendeur.

4. Dispositif d'analyse d'attaque (47) selon l'une quelconque des revendications 1 à 3, dans lequel
la section de détermination (472, S102) est configurée pour déterminer qu'il existe une forte possibilité que l'élément cible n'ait subi aucune violation dans un cas où une source de communication de la communication est un équipement de véhicule externe.

5. Dispositif d'analyse d'attaque (47) selon l'une quelconque des revendications 1 à 4, dans lequel
le journal système inclut un journal d'anomalies indiquant une anomalie détectée par le système de commande électronique (2), et
le dispositif d'analyse d'attaque (47) comprend en outre
une section d'estimation (474, 5103, 5104) configurée pour estimer une catégorie de l'attaque en déterminant une similarité entre : des informations d'anomalies mesurées générées sur la base du journal d'anomalies et indiquant une combinaison de l'anomalie réellement détectée ; et des informations d'anomalies prévues indiquant une combinaison d'anomalies prévues pour se produire dans le système de commande électronique (2) lorsque l'attaque est reçue, pour chaque catégorie de l'attaque.

6. Dispositif d'analyse d'attaque (47) selon la revendication 5, dans lequel
dans les informations d'anomalies prévues, une combinaison d'anomalies prévues peut être modifiée en utilisant les informations de correspondance déterminées par la section de détermination (472, 5102) pour coïncider avec un type de l'attaque.

7. Dispositif d'analyse d'attaque (47) selon la revendication 6, comprenant en outre :
une section d'inspection (45) configurée pour analyser le journal de communication, et spécifier au moins un parmi une destination de communication malveillante ou un contenu de communication malveillant,
dans lequel
le journal de communication des informations de correspondance inclut au moins un parmi une destination de communication malveillante ou un contenu de communication malveillant.

8. Dispositif d'analyse d'attaque (47) selon l'une quelconque des revendications 1 à 7, dans lequel
la section de détermination (472, S102) est configurée pour spécifier une position où une anomalie s'est produite dans le système de commande électronique (2) en fonction de si les informations de correspondance coïncident avec l'un quelconque d'une pluralité de types de l'attaque, et est capable de classer si la position où l'anomalie s'est produite est une position violée par l'attaque ou une position très susceptible d'avoir été violée par l'attaque.

9. Dispositif d'analyse d'attaque (47) selon l'une quelconque des revendications 6 à 8, dans lequel
le journal d'anomalies et le journal de communication sont associés afin d'être synchronisés l'un sur l'autre sur la base d'une heure à laquelle une anomalie incluse dans le journal d'anomalies se produit et d'une heure de communication incluse dans le journal de communication.

10. Dispositif d'analyse d'attaque (47) selon l'une quelconque des revendications 6 à 9, dans lequel
les informations d'anomalies prévues sont des informations qui expriment, avec un coefficient, une position où une anomalie est prévue pour se produire dans le système de commande électronique (2) lors de la réception de l'attaque, pour chaque catégorie de l'attaque, et
dans les informations d'anomalies prévues, une combinaison d'anomalies prévues peut être modifiée en changeant le coefficient.

11. Dispositif d'analyse d'attaque (47) selon l'une quelconque des revendications 6 à 10, dans lequel :
le système de commande électronique (2) inclut une pluralité d'unités de commande électroniques (2a, 2b, 2c, 2d, 2e) et présente une structure en couches dans laquelle chacune de la pluralité d'unités de commande électroniques (2a, 2b, 2c, 2d, 2e) est associée à l'une quelconque d'une pluralité de couches préparées à l'avance ; et
la section d'estimation (474, 5103, 5104) est configurée pour estimer qu'une autre unité de commande électronique (2a, 2b, 2c, 2d, 2e) située dans une couche identique à une couche d'une unité de commande électronique (2a, 2b, 2c, 2d, 2e) dans laquelle une anomalie est prévue pour se produire n'a subi aucune violation, l'unité de commande électronique (2a, 2b, 2c, 2d, 2e) étant indiquée par les informations de correspondance déterminées par la section de détermination (472, 5102) comme coïncidant avec un type de l'attaque.

12. Dispositif d'analyse d'attaque (47) selon la revendication 1, dans lequel :
le journal système inclut un historique de médiation de communication par une fonction de médiation de communication dans le système de commande électronique (2), indiquant une médiation de communication d'où à où elle a été assurée par la fonction de médiation de communication ; et
l'unité de détermination est configurée pour déterminer si une source de la communication décrite dans le journal de communication présente la fonction de médiation de communication, et lorsqu'elle spécifie que la source de la communication décrite dans le journal de communication présente la fonction de médiation de communication, se référer à l'historique de médiation de communication pour déterminer quel équipement est une source de la communication avec la destination de communication située à l'extérieur du véhicule (10) afin de déterminer si l'élément cible représentant au moins un parmi le système de commande électronique (2) ou le composant du système de commande électronique (2) a été violé.

13. Procédé d'analyse d'attaque pour analyser une attaque via un réseau contre un système de commande électronique (2) construit dans un véhicule (10), le procédé d'analyse d'attaque comprenant :
la détermination (472, S102) si des informations de correspondance coïncident avec un type prédéfini de l'attaque ; et
la détermination si un élément cible représentant au moins un parmi le système de commande électronique (2) ou un composant du système de commande électronique (2) a été violé,
**caractérisé en ce que**
les informations de correspondance sont obtenues en associant un journal système qui est un journal généré par le système de commande électronique (2) construit dans le véhicule (10) à un journal de communication qui est un journal de communication entre le système de commande électronique (2) et une destination de communication située à l'extérieur du véhicule (10), le journal de communication étant généré par un dispositif de véhicule externe (4) qui est situé à l'extérieur du véhicule (10) et relaie et surveille la communication.

14. Programme d'analyse d'attaque destiné à amener un ordinateur à mettre en œuvre une fonction, l'ordinateur étant configuré pour analyser une attaque via un réseau contre un système de commande électronique (2) construit dans un véhicule (10), le programme d'analyse d'attaque amenant l'ordinateur à mettre en œuvre :
une fonction permettant de déterminer (472, 5102) si des informations de correspondance coïncident avec un type prédéfini de l'attaque, les informations de correspondance étant obtenues en associant un journal système qui est un journal du système de commande électronique (2) à un journal de communication qui est un journal de communication entre le système de commande électronique (2) et un extérieur du véhicule (10) ; et de déterminer si un élément cible représentant au moins un parmi le système de commande électronique (2) ou un composant du système de commande électronique (2) a été violé,
**caractérisé en ce que**
les informations de correspondance sont obtenues en associant un journal système qui est un journal généré par le système de commande électronique (2) construit dans le véhicule (10) à un journal de communication qui est un journal de communication entre le système de commande électronique (2) et une destination de communication située à l'extérieur du véhicule (10), le journal de communication étant généré par un dispositif de véhicule externe (4) qui est situé à l'extérieur du véhicule (10) et relaie et surveille la communication.
